# EUROPEAN PATENT APPLICATION

(11) **EP 4 627 977 A1**
(43) Date of publication of application: **08.10.2025**
(21) Application number: 25168001.3
(22) Date of filing: 02.04.2025
(51) Int. Cl.: A47J 31/44

(54) **COFFEE BREWER WITH MULTIPLE BREW MODES**

(30) Priority: 04.04.2024 US 202418627403; 04.04.2024 US 202418627408
(71) Applicant: Fellow Industries, Inc., San Francisco, CA 94110 (US)
(72) Inventor: Terzulli, Nicholas, San Fransisco (US); Chebeleu, Livius, San Jose (US); Hudak, Andrew, San Francisco (US); Lin, Denis, San Francisco (US); Kunst, Nicholas, Oakland (US); Matthews, Dan, Pacifica (US)
(74) Representative: Hey, Andrew Stuart

(57) **Abstract**

A coffee brewer can include a main body, water tank, filter box, and multimode showerhead. The water tank can provide water for brewing. The filter box can receive water and coffee brewing materials, brew coffee, and dispense brewed coffee from a filter box outlet. The multimode showerhead can be at the filter box and can operate in multiple different brew modes including a first brew mode for brewing a single serving of coffee and a second brew mode for brewing a multiple serving batch of coffee. The multimode showerhead can include nozzles that dispense water within the filter box. A first portion of the nozzles can be open and dispense water while a second portion of the nozzles can be closed and not dispense water when the showerhead operates in the first brew mode. All nozzles can be open when the showerhead operates in the second brew mode.

## Description

### TECHNICAL FIELD

The present disclosure relates generally to beverage brewing products, and more particularly to coffee brewers suitable for home and small environment use.

### BACKGROUND

Brewers for coffee and other brewed beverages are well known and many allow home users to experiment with a wide array of coffee bean varieties as well as brewing materials for other beverages such as tea, chai, cider, and the like. While simple brewers intended for home and small environment use can be relatively inexpensive and convenient, such brewers often do not have all of the features and abilities of expensive industrial and commercial brewers that are used in high volume production and sophisticated coffee shop environments.

Unfortunately, many types of home and small environment brewers are limited with respect to specific brew modes. While a given coffee brewer can, for example, operate well in a batch brew mode for large amounts of coffee, such as to fill a coffee pot or carafe, that same coffee brewer is typically unable to brew quality single servings of coffee only. Other brewers adapted for single serve brewing, such as pod based brewers, are unable to also brew multiple serving batches of coffee or other beverages. While some brewers are capable of brewing in both single serving and larger batch modes, switching between these modes typically requires the inconvenient exchange of one or more machine components, such as hot water dispersal devices.

In addition, some sophisticated consumers like to incorporate a bloom phase or process prior to an actual brewing process. This typically requires manual processing such as a pour over, however, as most home brewers do not provide any bloom feature. The few brewers that do allow for some form of bloom phase prior to brewing typically only provide a primitive or limited bloom that does not allow for the variability that many sophisticated consumers prefer. As another limiting example, many home brewers tend to brew at hot water temperatures that can fluctuate over the course of a brew, which can result in a lower quality brewed product.

Although traditional beverage brewers have worked well in the past, improvements are always helpful. In particular, what is desired are beverage brewers that can provide quality brewed beverages in both single serve and batch brew modes, that allow for variability in both bloom and brew phases, that brew at a constant hot water temperature, and that are still suitable for use in home and other small environments.

### SUMMARY

It is an advantage of the present disclosure to provide improved brewers for coffee and other hot beverages having more features and greater flexibility. The disclosed beverage brewers can provide for quality brewed beverages in both single serve and batch brew modes, variability in both bloom and brew phases, and brewing at a constant hot water temperature while still being suitable for use in home and other small environments. These advantages can be accomplished at least in part by utilizing a multimode showerhead and a processing system configured to provide bloom and brew phase variability as well as to maintain a constant hot water temperature, among other possible features.

In various embodiments of the present disclosure, a coffee brewer can include a main body, a water tank, a filter box, and a multimode showerhead. The main body can have an outer housing containing a plurality of internal components. The water tank can be coupled to the main body and configured to hold water therein. The water tank can be further configured to provide the water into the main body for brewing coffee. The filter box can be located at the main body and configured to receive the water and coffee brewing materials therein. The filter box can be further configured to brew coffee therein using the water and coffee brewing materials and to dispense the brewed coffee from a filter box outlet. The multimode showerhead can be located at the filter box and configured to operate in multiple different brew modes. The multiple different brew modes can include a first brew mode for brewing a single serving of coffee and a second brew mode for brewing a multiple serving batch of coffee. The multimode showerhead can include a plurality of nozzles configured to dispense the water onto the coffee brewing materials within the filter box. A first portion of the nozzles can be open and dispense water therefrom while a second portion of the nozzles can be closed and do not dispense water therefrom when the multimode showerhead operates in the first brew mode.

In various detailed embodiments, both of the first and second portions of the nozzles can be open and dispense water therefrom when the multimode showerhead operates in the second brew mode. The multimode showerhead can also include a brew mode selection knob located proximate its center, and this brew mode selection knob can be configured to rotate to allow a user to switch between the first brew mode and the second brew mode. Rotating the brew mode selection knob from the second brew mode to the first brew mode can result in closing off water flow within the showerhead to the second portion of the plurality of nozzles. The filter box can include a lid configured to facilitate opening and closing of the filter box. The multimode showerhead can be coupled to an inner surface of the lid.

In further detailed embodiments, the coffee brewer can also include a first removable basket configured to be installed into and removed from the filter box. The first removable basket can define a first internal volume, can be configured to receive the water and coffee brewing materials therein, can be configured to brew coffee therein using the water and coffee brewing materials, and can be configured to dispense the brewed coffee therefrom. The first removable basket can be configured to be used for the first brew mode but not for the second brew mode. The filter box can include a first sensor configured to detect the presence of the first removable basket, and the coffee brewer can be configured to brew coffee in the first brew mode only when the first removable basket is detected as being installed. In some arrangements, the coffee brewer can also include a second removable basket configured to be installed into and removed from the filter box. The second removable basket can define a second internal volume that is different than the first internal volume, can be configured to receive the water and coffee brewing materials therein, can be configured to brew coffee therein using the water and coffee brewing materials, and can be configured to dispense the brewed coffee therefrom. The second removable basket can be configured to be used for the second brew mode but not for the first brew mode. The filter box can include a second sensor configured to detect the presence of the second removable basket, and the coffee brewer can be configured to brew coffee in the second brew mode only when the second removable basket is detected as being installed. In some arrangements, the main body and water tank of the overall coffee brewer can combine to define an overall shape that is substantially cubic.

In various further embodiments of the present disclosure, a system configured for the brewing of hot beverages can include a brewer, a first removable basket, and a second removable basket. The brewer can have a main body, a water tank, a filter box, and a multimode showerhead. The multimode showerhead can be configured to operate in multiple different brew modes including a first brew mode for brewing a single beverage serving and a second brew mode for brewing a multiple beverage serving batch. The multimode showerhead can include a plurality of nozzles configured to dispense hot water onto brewing materials within the filter box. A first portion of the plurality of nozzles can be open and dispense water therefrom while a second portion of the plurality of nozzles can be closed and do not dispense water therefrom when the multimode showerhead operates in the first brew mode. The first removable basket can be configured to be installed into and removed from the filter box and can define a first internal volume that corresponds to the single beverage serving. The first removable basket can be configured to receive hot water and brewing materials therein, to brew the single beverage serving therein using hot water from the multimode showerhead when the multimode showerhead operates in the first brew mode, and to dispense the single beverage serving therefrom. The second removable basket can be configured to be installed into and removed from the filter box when the first removable basket is removed therefrom and can define a second internal volume that corresponds to the multiple beverage serving batch. The second removable basket can be configured to receive hot water and brewing materials therein, to brew the multiple beverage serving batch therein using hot water from the multimode showerhead when the multimode showerhead operates in the second brew mode, and to dispense the multiple beverage serving batch therefrom.

In various detailed embodiments, the brewer can include a base located beneath the filter box, the base including a base sensor, and the overall system can further include a removable container configured to be placed atop the base and receive the multiple beverage serving batch dispensed therefrom. The removable container can include a bottom, a magnetic component located at the bottom, at least one sidewall, an upper opening, and a container volume between the bottom, the at least one sidewall, and the upper opening. The container volume can be larger than a volume of the multiple beverage serving batch. The base sensor can be configured to detect when the removable container magnetic component is present and communicate this presence to a processing component of the system.

The removable container can further include a removable lid covering the upper opening and this removable lid can include a hollow knob protruding from its top surface. The hollow knob can be configured to actuate a plunger at the bottom of the second removable basket to facilitate flowing the multiple beverage serving batch from the second removable basket through the hollow knob into the removable container. The second removable basket can also include a drip stop arrangement that prevents the multiple beverage serving batch from being dispensed therefrom when the plunger is not actuated.

In further embodiments of the present disclosure, a multimode showerhead configured for use with a beverage brewing system can include a first set of nozzles, a second set of nozzles, and a brew mode selection knob. The first set of nozzles can be configured to dispense hot water onto beverage brewing materials within a filter box of the beverage brewing system when the multimode showerhead is configured to operate in a first brew mode for brewing a single beverage serving. The second set of nozzles can be configured to dispense hot water onto the beverage brewing materials when the multimode showerhead is configured to operate in a second brew mode for brewing a multiple serving beverage batch. The second set of nozzles can be closed when the multimode showerhead is configured to operate in the first brew mode. The brew mode selection knob can be located proximate the center of the multimode showerhead and can be configured to rotate to allow a user to switch between the first brew mode and the second brew mode.

In various detailed embodiments, the first set of nozzles can remain open when the multimode showerhead is configured to operate in the second brew mode. In various arrangements, the multimode showerhead can also include a water inlet adapter, an internal water passage, and a face seal. The water inlet adapter can be configured to receive the hot water from a heating element of the beverage brewing system. The internal water passage can be configured to facilitate flow of the hot water from the water inlet adapter to the first set of nozzles and the second set of nozzles. The face seal can be formed at an inner surface of the brew mode selection knob and an inner surface of the water inlet adapter, wherein rotation of the brew mode selection knob from the second brew mode to the first brew mode can result in the face seal forming to restrict the flow of hot water to portions of the internal water passage where the second set of nozzles are located.

In alternative embodiments of the present disclosure, a coffee brewer can include a main body, a user input component, and a processing component. The main body can have an outer housing containing a plurality of internal components. The user input component can be disposed at the outer housing and can be configured to accept user inputs regarding coffee preparation settings. The processing component can be disposed within the main body and coupled to the user input component. The processing component can be configured to accept automatically user inputs from the user input component regarding coffee preparation settings that can include variable bloom phase settings, variable brew phase settings, or both, process automatically a bloom phase within the coffee brewer according to any specific bloom phase settings input by the user, and process automatically a brew phase within the coffee brewer according to any specific brew phase settings input by the user.

In various detailed embodiments, the variable bloom phase settings can include variable settings for bloom duration, bloom water volume, and bloom water temperature, while the variable brew phase settings can include variable settings for brew duration, brew water volume, and brew water temperature. Settings can vary independently, such that the coffee brewer can be configured to accept and process a user input brew water temperature that is different than a user input bloom water temperature. The coffee brewer can also include a water tank coupled to the main body and a water level sensing component located at the water tank and coupled to the processing component. The water level sensing component can be configured to detect the exact volume of water in the water tank and communicate that information to the processing component. The coffee brewer can also include a display component disposed at the outer housing and configured to display information regarding coffee preparation. The processing component can be coupled to the display component and can be further configured to provide automatically display information to the display component during a user input process, a bloom phase process, and a brew phase process. The display information can include a bloom duration setting, a bloom duration countdown, a bloom water volume setting, a bloom water volume, a bloom water temperature setting, a bloom water temperature, a brew duration setting, a brew duration countdown, a brew water volume setting, a brew water volume, a brew water temperature setting, a brew water temperature, or any combination thereof.

In further detailed embodiments, the coffee brewer can further include a water pump disposed within the main body and configured to pump water from the water tank into the main body and a heating component disposed within the main body and configured to heat water pumped therethrough by the water pump. The processing component can be coupled to the water pump and the heating component and can be further configured to control automatically operations of the water pump and the heating component such that all specific bloom phase settings input by the user and all specific brew phase settings input by the user are achieved. In some arrangements, the water pump can be a diaphragm pump and the processing component can be configured to control operations of the water pump dynamically using pulse width modulation. Also, the heating component can be a thick film flash heater having an integrated negative temperature coefficient component and the processing component can be configured to control operations of the heating component dynamically using a proportional-integral-derivative loop. The coffee brewer can also include a first temperature sensor coupled to the processing component and configured to detect the temperature of cold water entering the water pump and a second temperature sensor coupled to the processing component and configured to detect the temperature of hot water exiting the heating component. The processing component can be further configured to adjust automatically and dynamically the power output of the water pump, the power output of the heating component, or both, in response to the water temperatures detected by the first temperature sensor and the second temperature sensor. This dynamic adjusting can be configured to result in the temperature of hot water exiting the heating component remaining substantially constant at a temperature selected by the user. This substantially constant hot water exit temperature can be achieved regardless of any fluctuating voltage in outside power supplied to the coffee brewer. The processing component can also be configured to control automatically operations of the water pump such that the volume of water pumped by the water pump while processing a user selected bloom phase or brew phase matches a coffee preparation setting input by the user for water volume for the user selected bloom phase or brew phase. In some arrangements, the coffee brewer can also include a filter box located at the main body and configured for the bloom phase processing and the brew phase processing to be conducted therein, as well as a multimode showerhead located at the filter box and configured to operate in multiple different brew modes. The multiple different brew modes can include a first brew mode for brewing a single serving of coffee and a second brew mode for brewing a multiple serving batch of coffee, and the multimode showerhead can include a plurality of nozzles configured to dispense water onto coffee brewing materials within the filter box.

In further alternative embodiments of the present disclosure, various methods of brewing coffee with variable bloom and brew phases are provided. Pertinent process steps can include accepting user inputs, processing a bloom phase, and processing a brew phase. All steps can be performed automatically by a coffee brewer. The user inputs can be accepted at a user input component of the coffee brewer, and these user inputs can involve coffee preparation settings that can include variable bloom phase settings, variable brew phase settings, or both. The bloom phase can be processed by a processing component of the coffee brewer according to any specific bloom phase settings input by the user. The brew phase can be processed by the processing component according to any specific bloom phase settings input by the user.

In various detailed embodiments, the variable bloom phase settings can include variable settings for bloom duration, bloom water volume, and bloom water temperature, and the variable brew phase settings can include variable settings for brew duration, brew water volume, and brew water temperature. Additional process steps can include initiating a water pump and heating component within the coffee brewer, and also varying functions of the water pump and heating component. Both of these steps can be performed automatically by the processing component. The initiating can take place after all user inputs are accepted and coffee production is set to begin. The varying functions can control the flow and temperature of water within the coffee brewer during the bloom phase processing, the brew phase processing, or both. The varying functions can result in the temperature of hot water exiting the heating component remaining substantially constant at a temperature selected by the user. Still further process steps can include detecting automatically by a water level sensing component of the coffee brewer the exact volume of water in a water tank of the coffee brewer, communicating automatically by the water level sensing component the detected volume of water to the processing component, and controlling automatically by the processing component one or more additional functions of the coffee brewer based on the detected volume of water.

Other apparatuses, methods, features, and advantages of the disclosure will be or will become apparent to one with skill in the art upon examination of the following figures and detailed description. It is intended that all such additional apparatuses, methods, features and advantages be included within this description, be within the scope of the disclosure, and be protected by the accompanying claims.

### BRIEF DESCRIPTION OF THE DRAWINGS

The included drawings are for illustrative purposes and serve only to provide examples of possible structures and arrangements for the disclosed systems, apparatuses, features, and methods for coffee brewers with multiple brew modes and variable bloom and brew phases. These drawings in no way limit any changes in form and detail that may be made to the disclosure by one skilled in the art without departing from the scope of the appended independent claims.
FIG. 1 illustrates in front perspective view an example coffee brewer according to one embodiment of the present disclosure.
FIG. 2A illustrates in side perspective view the coffee brewer of FIG. 1 according to one embodiment of the present disclosure.
FIG. 2B illustrates in front elevation view the coffee brewer of FIG. 1 according to one embodiment of the present disclosure.
FIG. 2C illustrates in side elevation view the coffee brewer of FIG. 1 according to one embodiment of the present disclosure.
FIG. 2D illustrates in top plan view the coffee brewer of FIG. 1 according to one embodiment of the present disclosure.
FIG. 3 illustrates in front perspective view an example coffee brewer with its water tank and container removed therefrom according to one embodiment of the present disclosure.
FIG. 4A illustrates in front perspective view an example container for a coffee brewer with its lid removed according to one embodiment of the present disclosure.
FIG. 4B illustrates in front elevation view the assembled container of FIG. 4A placed onto the base of a coffee brewer according to one embodiment of the present disclosure.
FIG. 5 illustrates in front perspective view an example coffee brewer with its filter box opened and coffee materials inside according to one embodiment of the present disclosure.
FIG. 6 illustrates in top plan view an example filter box lid for a coffee brewer with its top cover removed according to one embodiment of the present disclosure.
FIG. 7A illustrates in front perspective view an example filter box for a coffee brewer configured for a single serve brew mode according to one embodiment of the present disclosure.
FIG. 7B illustrates in top plan view the filter box of FIG. 7A according to one embodiment of the present disclosure.
FIG. 7C illustrates in front cross-section view the filter box of FIG. 7A according to one embodiment of the present disclosure.
FIG. 7D illustrates in front cross-section view an example filter box lid for a coffee brewer configured for a single serve brew mode according to one embodiment of the present disclosure.
FIG. 7E illustrates in front isometric view an example single serve basket for a coffee brewer according to one embodiment of the present disclosure.
FIG. 7F illustrates in front elevation view the single serve basket of FIG. 7E according to one embodiment of the present disclosure.
FIG. 8A illustrates in front perspective view an example filter box for a coffee brewer configured for a batch brew mode according to one embodiment of the present disclosure.
FIG. 8B illustrates in top plan view the filter box of FIG. 8A according to one embodiment of the present disclosure.
FIG. 8C illustrates in front cross-section view the filter box of FIG. 8A according to one embodiment of the present disclosure.
FIG. 8D illustrates in front cross-section view an example filter box lid for a coffee brewer configured for a batch brew mode according to one embodiment of the present disclosure.
FIG. 8E illustrates in front isometric view an example batch basket for a coffee brewer according to one embodiment of the present disclosure.
FIG. 8F illustrates in front elevation view the batch basket of FIG. 8E according to one embodiment of the present disclosure.
FIG. 9 illustrates in rear elevation view an example coffee brewer with its rear panel removed according to one embodiment of the present disclosure.
FIG. 10 illustrates in side perspective view an example coffee brewer with its front control box removed according to one embodiment of the present disclosure.
FIG. 11 illustrates in side cross-section view an example coffee brewer according to one embodiment of the present disclosure.
FIG. 12 illustrates in front perspective view an example front control box of a coffee brewer according to one embodiment of the present disclosure.
FIGS. 13A-13D illustrate in front plan view example output displays for a front control box of a coffee brewer according to one embodiment of the present disclosure.
FIG. 14 illustrates a flowchart of an example method of brewing coffee with variable bloom and brew phases according to one embodiment of the present disclosure.

### DETAILED DESCRIPTION

Exemplary applications of apparatuses, systems, and methods according to the present disclosure are described in this section. These examples are being provided solely to add context and aid in the understanding of the disclosure. It will thus be apparent to one skilled in the art that the present disclosure may be practiced without some or all of these specific details provided herein. In some instances, well known process steps have not been described in detail in order to avoid unnecessarily obscuring the present disclosure. Other applications are possible, such that the following examples should not be taken as limiting. In the following detailed description, references are made to the accompanying drawings, which form a part of the description and in which are shown, by way of illustration, specific embodiments of the present disclosure. Although these embodiments are described in sufficient detail to enable one skilled in the art to practice the disclosure, it is understood that these examples are not limiting, such that other embodiments may be used, and changes may be made without departing from the scope of the appended claims.

The present disclosure relates in various embodiments to systems, apparatuses, features, and methods for improved coffee brewers, brewing systems, and related components. The disclosed coffee brewers can provide advanced functionalities in an aesthetically pleasing fashion while still being suitable and affordable for home and other small environment use. In particular, the disclosed systems, apparatuses, features and methods can include brewers that are configured to brew coffee or other beverages in multiple different brew modes, as well as having variable and controlled bloom and brew phases, the ability to brew at controlled constant hot temperatures, and the ability to detect and operate various functions based on exact water levels in the water tank, among other improved features and advantages.

Although the various embodiments disclosed herein focus on coffee brewers suitable for home use for purposes of simplicity in illustration, it will be readily appreciated that the disclosed systems, apparatuses, features, and methods can similarly be used for industrial grade coffee brewers and high-end commercial coffee brewers, as well as brewers for other types of beverages and fluids. These can include, for example, brewers for tea, herbal beverages, chai, yerba mate, hot chocolate, hot cider, and other suitable brewed beverages and fluids. Although the term coffee is used herein for purposes of discussion, it will be understood that the disclosed embodiments can be used for any other suitable type of brewed beverage or fluid. Other suitable applications and uses will be readily appreciated by those of skill in the art. It will be appreciated that the temperature of the hot water used for brewing beverages may vary, with different temperatures/temperature ranges appropriate for different beverages. As used herein, "hot water" refers to water having a temperature suitable for brewing the beverage being brewed, for example over 60° C, optionally between 60° C and 100° C, optionally between 70° C to 100° C, optionally between 80° C to 100° C, optionally between 90° C to 99° C.

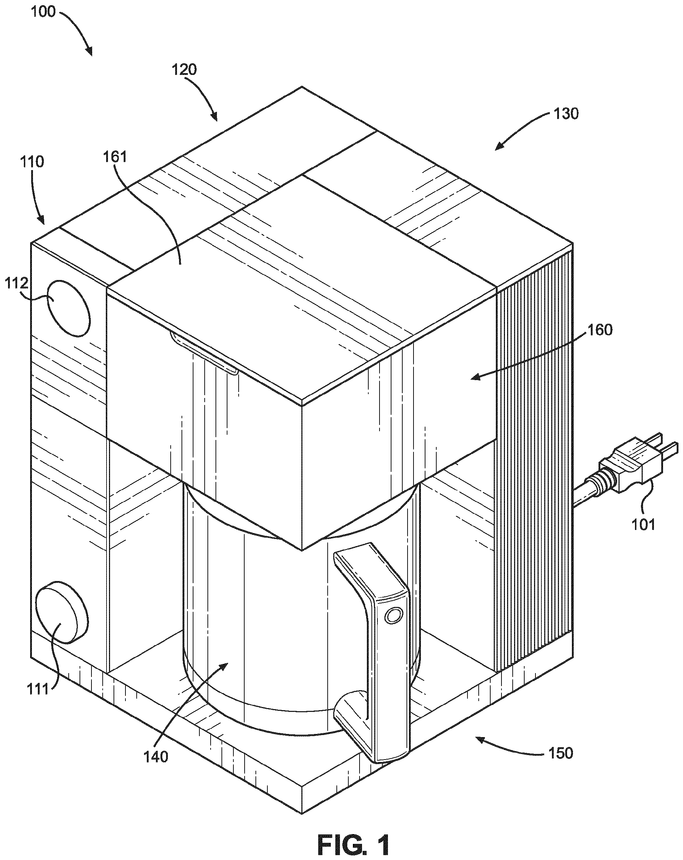

Referring first to FIG. 1, an example coffee brewer according to one embodiment of the present disclosure is illustrated in front perspective view. Coffee brewer 100 can be referred to as an "all-purpose brewer" since it can be readily used to brew coffee or other hot beverages in a single serving mode as well as full carafes, pots, or other large sizes in a batch mode, and can also have various settings that are readily adjustable to control for different parameters in bloom and brew phases of any brewing mode. Coffee brewer 100 can also be referred to simply as a "brewer," since it can be used to brew other hot beverages besides coffee, as will be readily appreciated. Coffee brewer 100 can generally be cubic or cube shaped when removable components are installed as shown, although other shapes and configurations are also possible.

Coffee brewer 100 can include various primary sections or components visible at its exterior, such as front control box 110, water tank 120, pump and heater box 130, container 140, base 150, and filter box 160, among other possible primary sections and components. Some of these primary sections or components can be assembled together in a relatively permanent manner to form a cubic overall shape while others can be configured to be readily removable from the cubic shaped coffee brewer 100, such as water tank 120 and container 140, for example. In some arrangements, a removable container 140 can be referred to as a carafe or coffee pot, while filter box 160 can be referred to as a brewing chamber. Other suitable names are also possible for these and other sections, components, items, or features. Each of these primary sections or components can include various parts, items, and features, many of which are described in greater detail below. Among various items that can be seen at its exterior, coffee brewer 100 can include electrical cord 101 extending from the back of base 150, input knob 111 and output display 112 on front control box 110, and filter box lid 161 on filter box 160.

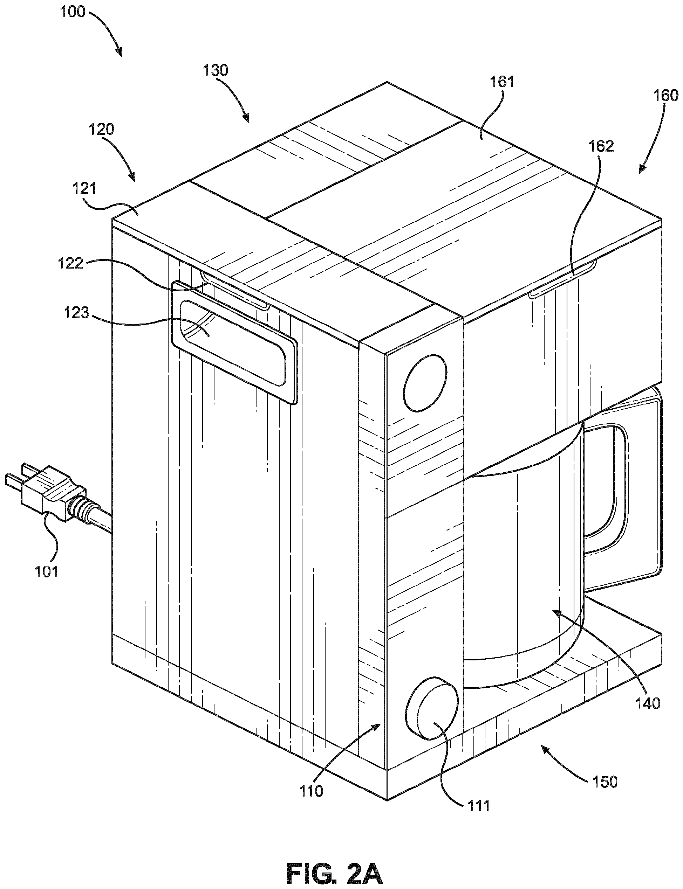

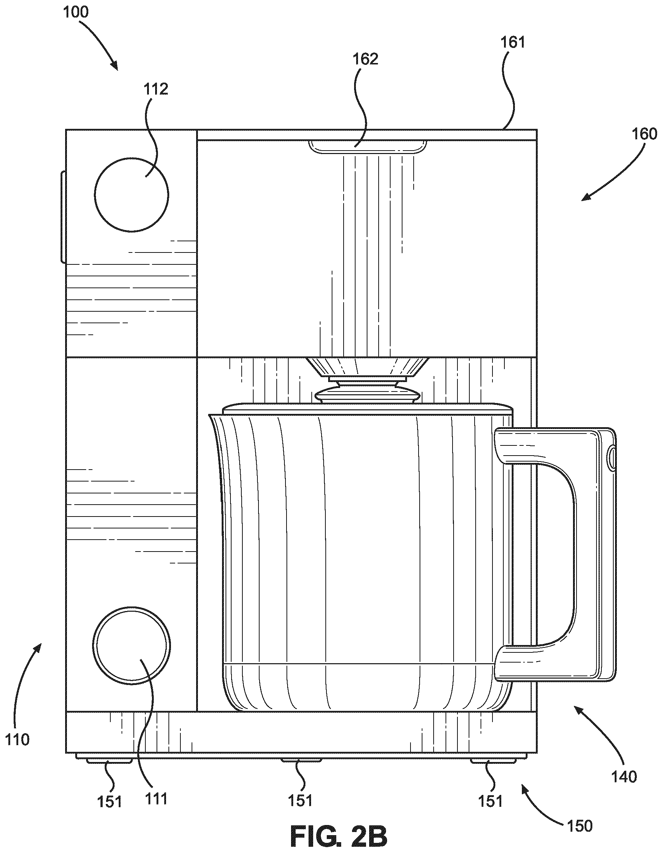

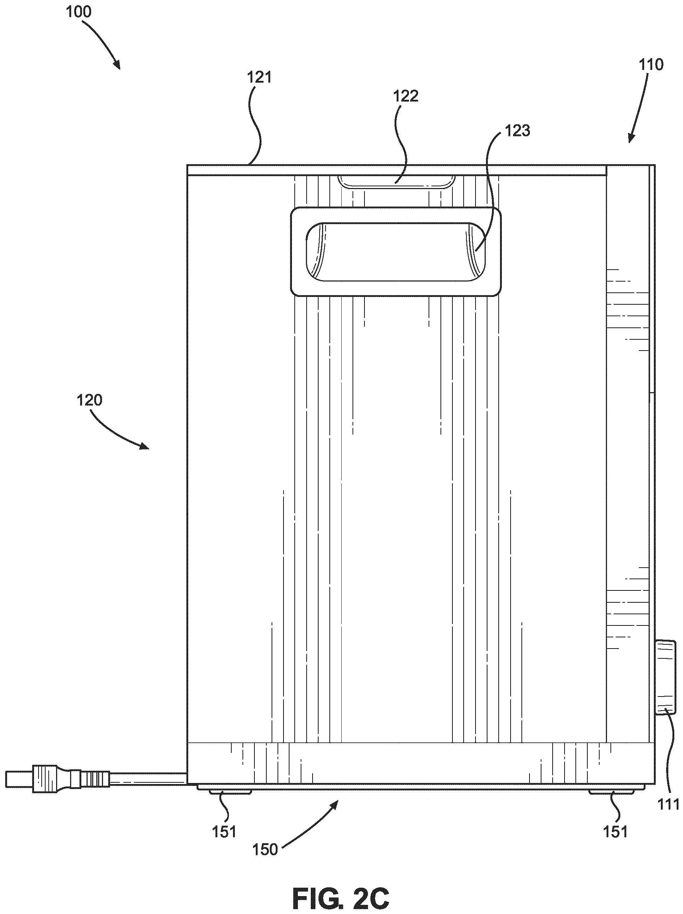

Continuing with FIGS. 2A through 2D, the coffee brewer of FIG. 1 is shown in side perspective, front elevation, side elevation, and top plan views respectively. Further exterior items and features are noticeable from these additional views of the overall coffee brewer 100. These include, for example, water tank lid 121, water tank recess 122 that can facilitate opening and closing of the water tank lid, handle 123 that can facilitate removal and installation of water tank 120, feet 151 on the bottom of base 150 to limit overall device sliding, and filter box recess 162 that can facilitate lifting and closing of filter box lid 161. Although the outer housing surfaces of most items are shown as being smooth while an outer side housing of pump and heater box 130 is shown as having a scalloped surface (FIG. 1), it will be readily appreciated that such surface arrangements can be cosmetic in nature and that any housing or housing portion for any primary section or component can have an outer surface that can be smooth, scalloped, or can have any other surface design, shape, or arrangement.

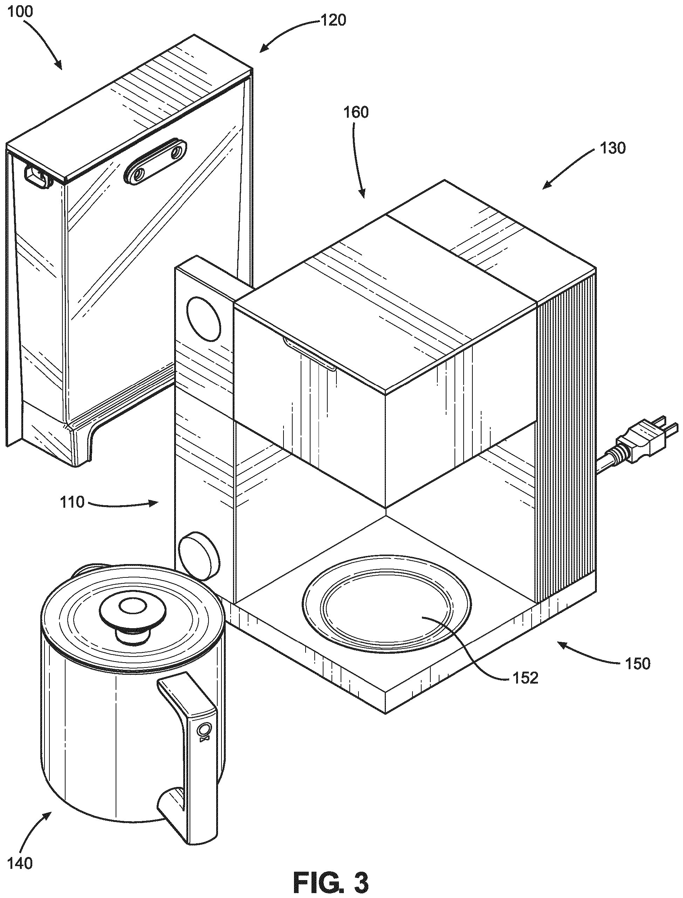

FIG. 3 illustrates in front perspective view an example coffee brewer with its water tank and container removed. Coffee brewer 100 can be identical or substantially similar to the brewer shown and described in FIG. 1 above. As noted above, water tank 120 and container 140 can be readily removable from and placed back to coffee brewer 100. Conversely, front control box 110, pump and heater box 130, base 150, and filter box 160 can be assembled together such that these sections or components are not readily removable from coffee brewer 100. Container 140, which again can be a removable carafe or coffee pot, for example, can be placed atop and removed from a dispensing region 152 on a top surface of base 150 such that it is under a fluid dispenser of filter box 160 during a brewing process. Dispensing region 152 can include a circular shaped depression into base 150, which depression can be sized and shaped to match the bottom geometry of container 140 to facilitate a proper alignment of the container atop the top surface of the base. Freshly brewed coffee or other hot beverages can then be captured into container 140 and a user can then remove this carafe or other container to another location for brewed coffee or beverage consumption. In some arrangements a coffee mug or other suitable smaller container can be placed atop base 150 during a brewing process to collect freshly brewed coffee therein, such as for a single serve brew mode.

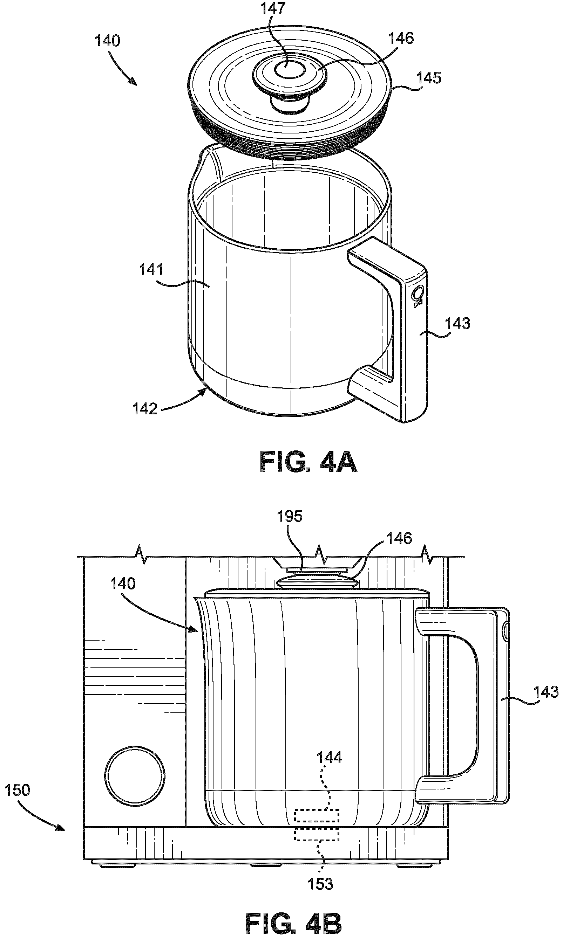

FIG. 4A depicts an example container for a coffee brewer with its lid removed in front perspective view, while FIG. 4B shows the assembled container placed onto the base of a coffee brewer in front elevation view. Container 140 can be a removable container configured to hold a liquid, such as a removable coffee carafe in one specific example. As shown in FIG. 4A, container 140 can include one or more sidewalls, such as a circular sidewall 141. A container bottom 142 and handle 143 can be coupled to sidewall 141. An upper opening and pouring spout can be formed along the upper edge of circular sidewall 141, as will be readily appreciated for a typical coffee pot or carafe. A container volume suitable for holding liquid, such as brewed coffee, can be formed between bottom 142, sidewall(s) 141, and the upper opening. Such a container volume can be larger than the volume of a multiple beverage serving batch that the coffee brewer is configured to brew.

A removable lid 145 can be fitted for placement atop removable container 140, such as when the container is to be transported with coffee therein or is to be placed atop the base of the coffee brewer to collect brewed coffee. In some arrangements, removable lid 145 can have a hollow knob 146 protruding from its top surface, with this knob having a hollow region or vertical opening 147 configured to receive brewed coffee from the filter box and direct the coffee therethrough into the container volume of container 140. Hollow knob 146 can be sized and shaped such that it is configured to actuate a plunger or other item at the filter box of the coffee brewer to facilitate the flow of brewed coffee from the filter box, through the hollow knob, and into the removable container 140, as set forth in greater detail below.

As shown in FIG. 4B, removable container 140 can be placed atop a dispensing region of base 150 of the coffee brewer such that hollow knob 146 engages with plunger 195 protruding from the bottom of the filter box, details for which are provided below. To reduce or eliminate waste or mess, it is preferable that container 140 be accurately aligned beneath the filter box so that all brewed coffee is dispensed into the container. A sufficiently accurate alignment can be facilitated by a proper engagement between hollow knob 146 and plunger 195 as well as by the bottom 142 of container 140 fitting within a suitably sized and shaped circular shaped depression at the top surface of base 150, as noted above. Additional components or items can optionally be used to facilitate an optimal horizontal alignment of container 140 atop base 150. For example, magnetic components in container 140 and base 150 can be used to provide a magnetic attraction force that helps to align container 140 properly. Various items, features, and details for such a magnetically guided horizontal positioning arrangement of a container atop a coffee device base can be found at, for example, commonly owned U.S. Patent Application No. 17/782,961, which is incorporated by reference herein for this purpose.

In some arrangements, it can be desirable to know whether container 140 is placed atop base 150, such as when coffee is to be brewed while coffee brewer 100 is configured in a batch brew mode. In the event that no container 140 is placed atop base 150 to receive a full batch of freshly brewed coffee, then an intelligent control system within the coffee brewer can be configured to prevent or stop the full batch from being brewed until the container is present. Alternatively, or in addition, the intelligent control system can provide an alert to a user that no carafe or container is present at the base to receive the brewed coffee. Detection of the presence or absence of container 140 can be facilitated using a magnet and sensor arrangement.

As one example, magnetic component 144 can be embedded within bottom 142 of container 140 at its center, while base sensor 153 can be embedded within base 150 at its center. Base sensor 153 can be configured to detect when magnetic component 144 is present, such as when removable container 140 is properly placed atop base 150. Base sensor 153 can also be configured to communicate the presence or absence of magnetic component 144 to a processing component of the system, which can use this information to allow batch mode brewing to proceed when magnetic component 144 (and thus container 140) is present, to prevent or stop batch mode brewing and/or to provide an alert to a user when the magnetic component is not present, or to take any other suitable action in light of this magnetic component status.

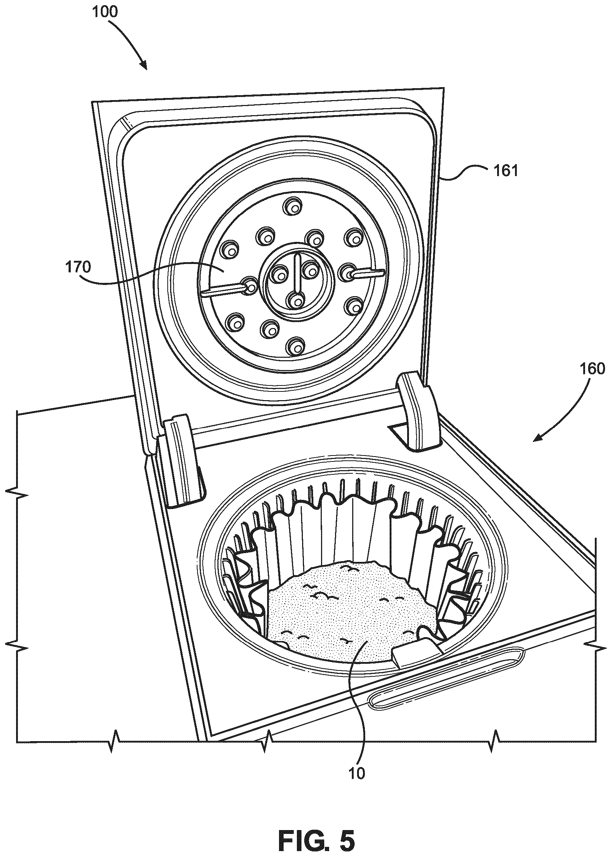

Turning next to FIG. 5, an example coffee brewer with its filter box opened and coffee materials inside is illustrated in front perspective view. Coffee brewer 100 can be identical or substantially similar to the brewer shown and described in FIG. 1 above, although some details may vary. As shown, filter box lid 161 can be pivoted from a horizontal closed position to a vertical open position to expose an internal region of filter box 160, which again can be called a brewing chamber or region. Brewing materials 10 can be placed into filter box 160, such as within a basket or other cavity suitable for brewing. Such a basket can be removable in some arrangements, as detailed below. Brewing materials 10 can include one or more filter items, such as a removable paper coffee filter, for example, as well as coffee grounds, tea leaves, one or more tea bags, or any other material suitable for brewing a beverage.

A showerhead 170 or other suitable water delivery device can be affixed or otherwise coupled to the bottom of filter box lid 161. Showerhead 170 can be arranged such that it is located directly above brewing materials 10 when filter box lid 161 is closed, which can result in spraying hot water onto the brewing materials during brewing operations. Showerhead 170 can be specially designed to facilitate coffee brewer 100 being able to provide multiple brew modes, as detailed below. Showerhead 170 can also be specially designed to facilitate coffee brewer 100 being able to provide variable bloom and brew phases, as also detailed below. Although shown and described as being located on filter box lid 161 within filter box 160, it is specifically contemplated that showerhead 170 can alternatively be located elsewhere within or about coffee brewer 100, such as outside of the filter box. Showerhead 170 can also be used with coffee brewers and other beverage brewing systems that do not include a filter box, such as simpler coffee machines, and can be located at any suitable location in such brewers and systems.

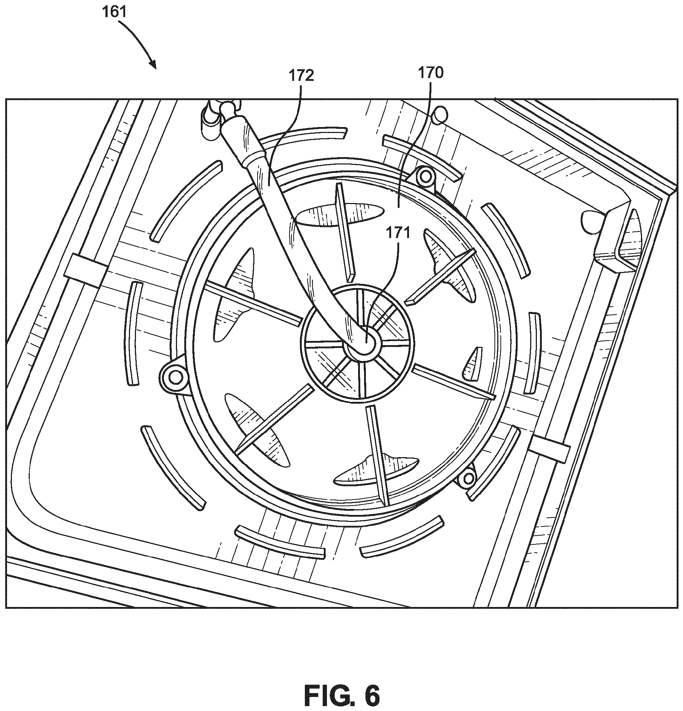

Continuing with FIG. 6, an example filter box lid for a coffee brewer with its top cover removed is shown in top plan view. Filter box lid 161 can be identical or substantially similar to the filter box lid shown and described in FIG. 1 above, albeit with its top cover removed. It will be understood that removal of this top cover may not be readily accomplished without some lid disassembly, such that the items visible here may not ordinarily be exposed during regular consumer use of the coffee brewer. As shown, a back side of showerhead 170 can be coupled to a water inlet adapter 171 that can receive hot water by way of hot water line 172, which can receive hot water pumped from a heating element located in a pump and heater box of the coffee brewer, as detailed below. Various features and their associated functions can be located on the front side of water inlet adapter 171, as also detailed below.

### MULTIPLE BREW MODES

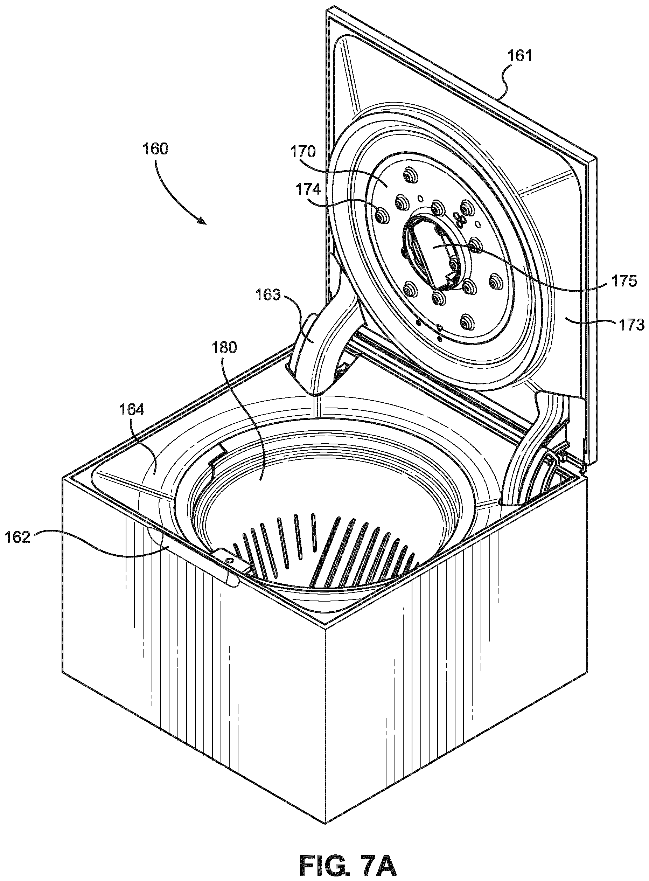

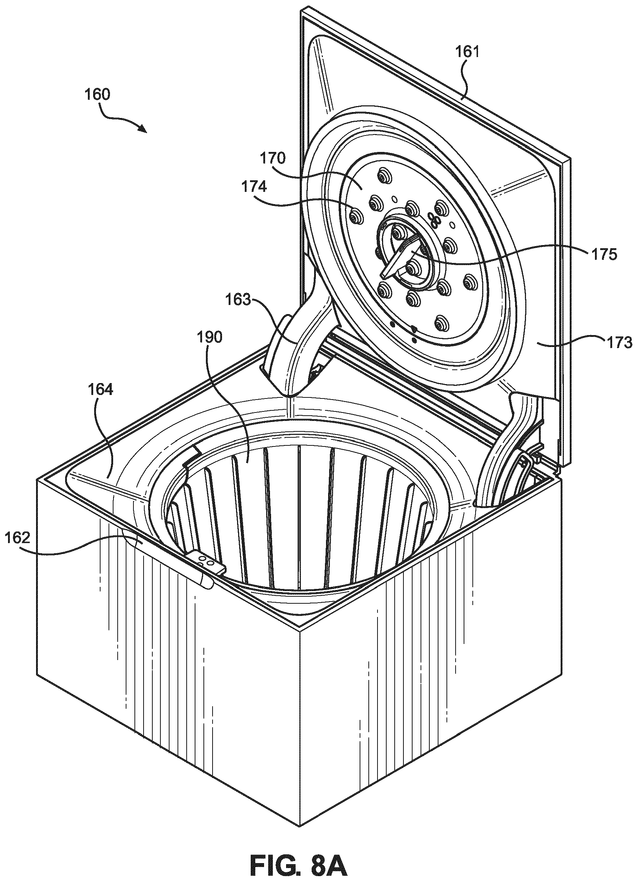

As noted above, the disclosed coffee brewer can be configured to operate in multiple different brew modes. As one example, a first brew mode can involve brewing only a single serving of coffee or other brewed beverage. As another example, a second brew mode can involve brewing multiple servings of coffee or other brewed beverage, such as a batch brew sufficient to fill a coffee pot or carafe. For purposes of discussion, the single serve brew mode can be considered as any brew of 450 ml or less, while the batch brew mode can be considered as any brew over 450 ml, although other designations and volume limits are also possible. One advantage of the disclosed coffee brewer is that it can be configured to operate in either of these single serve and batch brew modes without having to disassemble the brewer or exchange major components, such as the showerhead or other water delivery component. Rather, the showerhead can be a multimode showerhead that can have a brew mode selection knob that allows a user to readily reconfigure the showerhead to toggle between single serve and batch brew modes. In some arrangements, removable baskets designed for use with different brew modes can be put into the filter box to facilitate smoother operation of the coffee brewer depending on which brew mode is desired. Various features and details for these different brew modes will now be provided, with FIGS. 7A-7D showing a single serving brew mode configuration and FIGS. 8A-8D showing a batch brew mode configuration.

Transitioning now to FIG. 7A, an example filter box for a coffee brewer configured for a single serve brew mode is illustrated in front perspective view. Filter box 160 can be identical or substantially similar to the filter box shown and described in FIG. 1 above, albeit with filter box lid 161 open instead of closed. As shown, filter box 160 can be configured for a single serve brew mode, which can primarily involve adjusting multimode showerhead 170 to a single brew mode setting and inserting a removable single serve basket 180 into the filter box. As noted above, filter box lid 161 can be configured to pivot between closed and open positions where the lid is arranged horizontally or vertically respectively. This can be facilitated by way of one or more hinges 163 that can couple filter box lid 161 to filter box 160. Each hinge 163 can be part of a four-bar linkage contained within the main body of filter box 160, for example, which can provide for a secure and aesthetically pleasing opening and closing lid presentation. Single serve basket 180 can be sized and shaped to fit snugly within a deep portion of an internal cavity 164 within filter box 160, as also shown in other views below.

Multimode showerhead 170 can be supported by showerhead housing 173 that can be affixed or otherwise coupled to a bottom surface of filter box lid 161. As referenced above, multimode showerhead 170 can be configured to operate in multiple different brew modes that include a first brew mode for brewing a single serving of coffee (i.e., single serve brew mode) and a second brew mode for brewing a multiple serving batch of coffee (i.e., batch brew mode). Multimode showerhead 170 (which can also be referred to as simply a showerhead) can include a plurality of nozzles 174 or other water openings distributed about its face and configured to dispense water onto coffee materials within single serve basket 180 when the basket is within filter box 140. Showerhead 170 can also include a brew mode selection knob 175 located proximate its center, and this brew mode selection knob can be configured to rotate to allow a user to readily switch between brew modes. As shown, brew mode selection knob 175 can be rotated to a fully counterclockwise position for single serve brew mode.

Nozzles 174 can be arranged into first and second portions or subsets. A first portion of nozzles 174 can be open and dispense water therefrom while a second portion of the nozzles are closed and do not dispense water therefrom when multimode showerhead 170 operates in the single serve brew mode as shown. Conversely, all of the first and second portions of nozzles 174 can be open and dispense water therefrom when multimode showerhead 170 operates in the batch brew mode, as illustrated and detailed below. As such, the first portion of nozzles 174 can always be open, while the second portion of nozzles can be open or closed depending on the configuration of showerhead 170. The first portion of nozzles 174 can all be located toward the center of showerhead 170, such as on brew mode selection knob 175, while the second portion of nozzles can all be located away from the showerhead center. In some arrangements there can be three nozzles in the first portion of nozzles and twelve nozzles in the second portion of nozzles, although these exact nozzle counts can vary.

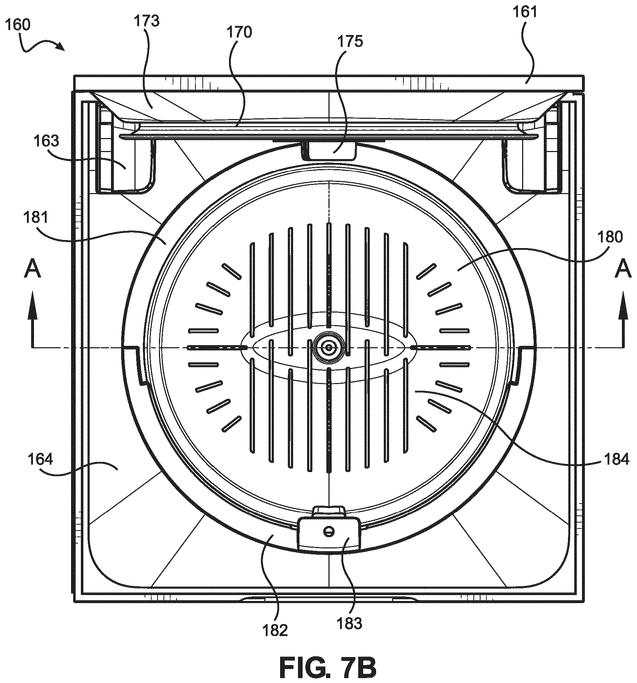

Continuing with FIG. 7B, the open filter box of FIG. 7A is shown in top plan view. Again, showerhead 170 can be coupled to filter box lid 161 by way of showerhead housing 173, and brew mode selection knob 175 can be rotated to a single serve brew mode position. This can involve rotating the knob fully counterclockwise, for example, which can result in closing off water flow to the second portion of nozzles, as detailed below. Single serve basket 180 can fit snugly within a deep portion at the center of internal cavity 164 within filter box 160, and to this end can have an upper flange 181 around its outer circumference that is sized and shaped to rest atop a corresponding ledge within internal cavity 164 to facilitate such a snug fit. Single serve basket 180 can be sized and shaped such that it defines an internal volume suitable for brewing a single serving of coffee or other brewed beverage therein. Single serve basket 180 can thus be designed to hold brewing materials therein, such as a paper filter and coffee grounds.

Single serve basket 180 can also have handle 182 coupled thereto, which handle can pivot between a horizontal position as shown and a vertically upright position to facilitate the easy removal of the basket from filter box 160. Handle 182 can also include a snap feature that keeps the handle locked at a horizontal position while installed into the filter box until a user actuates a release of the snap feature. A designation tab 183 at a top portion of handle 182 can show that basket 180 is a single serve basket, such as by way of a single dot designation for "single serve" basket. In some arrangements, handle 182 can also be a distinctive color, such as blue, for example, to further designate that this basket is for single serve use. Single serve basket 180 can also have thin fins or ribs 184 protruding inward from inner surfaces of its sidewalls that can function as standoff supports for a coffee filter placed into the basket, for example. Ribs 184 can promote the flow of coffee within a coffee bed held in a paper coffee filter, through the paper filter, between the ribs, and through one or more drain holes at the bottom of the basket. Ribs 184 can also prevent or reduce clogging within single serve basket 180. Single serve basket 180 can also include one or more emergency drain holes near the top of the basket to divert coffee flow in a desired direction in the event of clogging or other problems, rather than allowing coffee to overflow the basket over upper flange 181 in an uncontrolled manner.

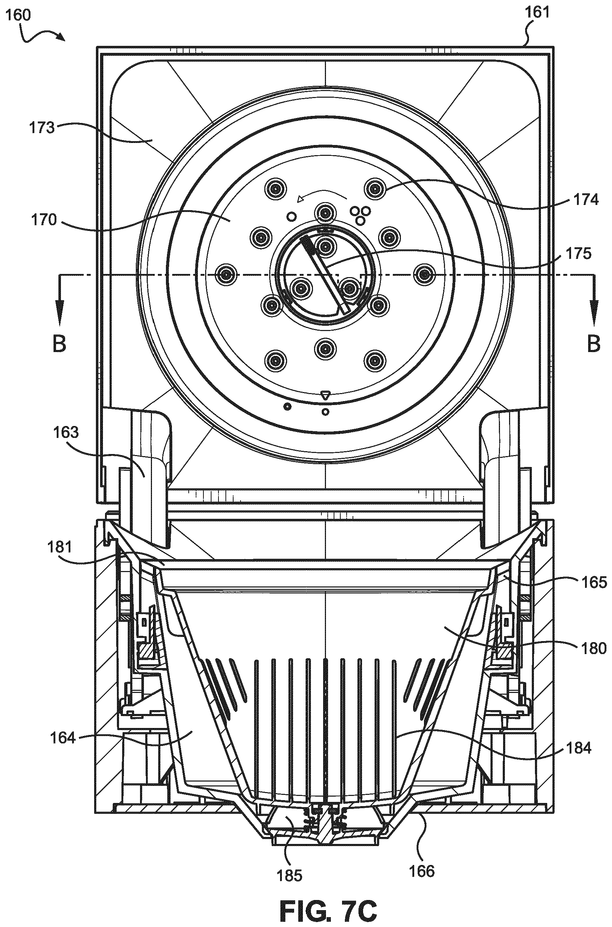

Moving next to FIG. 7C, the filter box of FIG. 7A is illustrated in front cross-section view along line A-A of FIG. 7B. As shown, this effectively results in a cross-section view of the filter box proper but a front plan view of hinges 163 and open filter box lid 161. This front plan view provides a different perspective for multimode showerhead 170, showerhead housing 173, and nozzles 174, which can again include an inner first portion of nozzles (e.g., three nozzles) located on brew mode selection knob 175 and an outer second portion of nozzles (e.g., twelve nozzles) located on the face of the showerhead but outside of the selection knob. Again, brew mode selection knob 175 can be rotated fully counterclockwise to a single serve brew mode position when filter box 160 is configured for a single serve brew mode. A designation graphic on the face of showerhead 170 can show brew mode selection knob positions for a single serve brew mode and a batch serve brew mode, such as by way of a single dot designation for "single serve" brew mode and a triple dot designation for "batch" brew mode. As shown, a raised vertical fin on brew mode selection knob 175 can point toward the single dot designation for single serve brew when the knob is rotated fully counterclockwise, and this fin can alternatively point toward the triple dot designation for batch brew when the knob is rotated fully clockwise.

In some arrangements, brew mode selection knob 175 can include a magnetic component (not shown) or other item located thereon such that the orientation or position of the knob can be detected by a sensor at filter box lid 161. For example, a magnetic reed switch can be located at the lid and configured to detect when a magnetic component on the knob is at a certain location, which can reflect whether the knob is rotated counterclockwise (single serve mode) or clockwise (batch mode). The sensor can communicate this information regarding the rotational position of brew mode selection knob 175 to a processing component within the coffee brewer, which can then know whether showerhead 170 is in its configuration for single serve brew mode or batch brew mode. The processing component can be configured to provide an alert to a user and/or prevent brewing if brew mode selection knob 175 is detected to be at the wrong rotational orientation for the desired single serve brew mode or batch brew mode. If single serve basket 180 is installed into filter box 160 but brew mode selection knob 175 is rotated clockwise to its batch brew mode configuration, for example, then the processing component can be configured to provide a user alert and refuse to proceed with brewing until a proper correction is made by the user.

Such a proper mode confirmation feature can also be facilitated by having another sensor arrangement associated with detecting proper basket placement. For example, single serve basket 180 can include a magnetic component (not shown) or other item located thereon, such as at a particular location along upper flange 181. The geometry of single serve basket 180 can be configured such that there is only one possible arrangement or orientation for the basket to be fully inserted within internal cavity 164 of filter box 160. When single serve basket 180 is properly installed within internal cavity 164, upper flange 181 can rest atop ledge 165 formed inside the internal cavity, which ledge can support the basket around most or all of the full circumference of the upper flange. One or more nonsymmetrical features such as tabs, protrusions, or narrower or wider regions along the circumference of upper flange 181 can mate with corresponding features along ledge 165 or other portions of internal cavity 164 to result in overall matching geometries that provide only one possible arrangement or orientation for single serve basket 180 to be fully installed.

A corresponding sensor located at internal cavity 164 can be arranged to detect the magnetic component or other item located at a particular location along upper flange 181 to determine that single serve basket 180 is properly installed. For example, a magnetic reed switch can be located at ledge 165 where a magnetic component on upper flange 181 will be when the basket is installed, and this magnetic reed switch or other sensor can communicate information regarding the presence or absence of this magnetic component (and thus presence or absence of single serve basket 180) to a processing component within the coffee brewer. The processing component can then know whether single serve basket 180 is installed and can be configured to provide an alert to a user and/or prevent brewing if brew mode selection knob 175 is at the wrong rotational orientation for single serve brew mode when the single serve basket is present. The processing component can also be configured to provide an alert to a user and/or prevent brewing if single serve basket 180 should be installed but is not detected as being present. Similar arrangements and capabilities can apply with respect to a separate batch basket and matching selection knob orientations for a batch brew mode, as noted below.

As shown in FIG. 7C, single serve basket 180 can define an internal volume that is relatively small, such that a significant gap can exist between the sidewall(s) of the basket and the internal walls of filter box 160 that define a deep portion of internal cavity 164. Again, one or more drain holes at the bottom of single serve basket 180 can allow brewed coffee to flow out of the basket at the bottom of internal cavity 164. Filter box 160 can have an outlet opening 166 along its bottom that can be sized and shaped to interact with a bottom portion of single serve basket 180. In some embodiments, filter box outlet opening 166 can be closed by default, such as by way of a flap or shutter arrangement. When installed, a bottom portion, attachment, or plunger 185 at the bottom of single serve basket 180 can protrude through such an outlet opening arrangement to allow brewed coffee to be dispensed out the bottom of filter box 160. Attachment 185 can include a drip stop arrangement that can be configured to prevent or limit unwanted leaking or dripping of coffee or other brewed beverage. Such a single serve basket drip stop at attachment 185 can include a spring loaded stopping plate or other blocking feature that can actuate against its spring bias to force open outlet opening 166 when single serve basket 180 is properly installed, but that can be spring loaded to help prevent leakage when the basket is not properly installed. This arrangement can also result in preventing leakage when single serve basket 180 is removed from filter box 160 after brewing a beverage.

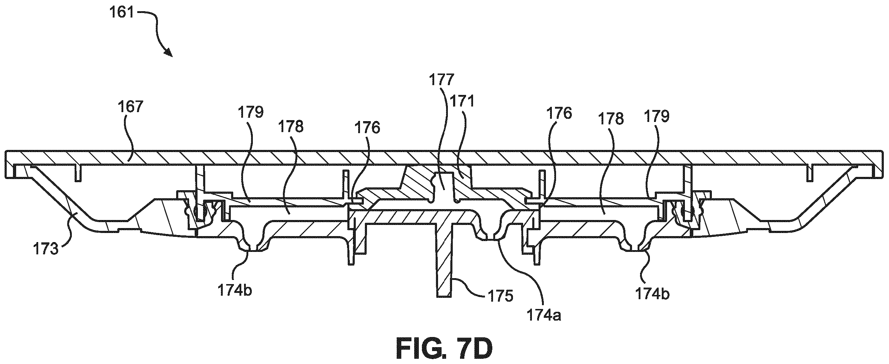

Proceeding to FIG. 7D, the filter box lid for the filter box of FIG. 7A is shown in front cross-section view along line B-B of FIG. 7C. Again, filter box lid 161 is shown as being configured for a single serve brew mode, such that only a first portion of its nozzles are open while a second portion of its nozzles are closed. Filter box lid can include top cover 167 (which is removed in FIG. 6) that can be coupled to showerhead housing 173 and other showerhead parts and items. Again, the showerhead portion of filter box lid 161 can include brew mode selection knob 175, which is shown as being rotated to a single serve brew mode position, and also nozzles 174a, 174b. Nozzle 174a can be an inner nozzle from a first portion of nozzles that are always open, while nozzles 174b can be outer nozzles from a second portion of nozzles that are closed for a single serve brew mode but open for a batch brew mode, as described above.

Filter box lid 161 can also include water inlet adapter 171 (also shown in FIG. 6), which can be where hot water is initially input into the multimode showerhead. When brew mode selection knob 175 is rotated to a single serve brew mode position as shown, this knob can rotate about its center which can also cause it to move laterally toward water inlet adapter 171. A face seal 176 can be formed at the back surface and around an outer circumference of brew mode selection knob 175 and at an inner surface and around an outer circumference of water inlet adapter 171 when the brew mode selection knob is fully rotated to press these items against each other at these circumference locations. This face seal 176 can then block the flow of water beyond this seal within the showerhead, which can serve to close off outer nozzles 174b when this seal is formed.

In particular, an internal water passage within the multimode showerhead (and thus within filter box lid 161) can include an internal water passage inner portion 177 and an internal water passage outer portion 178. As shown, inner portion 177 is formed between inner surfaces of water inlet adapter 171 and brew mode selection knob 175, such that hot water entering the showerhead at the water inlet adapter will always be able to flow through inner nozzles 174a located on the brew mode selection knob. Outer portion 178 of this internal water passage can be formed between a showerhead backing plate 179 and the rest of the showerhead face plate that surrounds the brew mode selection knob 175. When brew mode selection knob 175 is rotated to a single serve brew mode position as shown, the knob and face seal 176 is physically pressed against an outer region of water inlet adapter 171 to form a seal that prevents water from flowing from inner portion 177 to outer portion 178 of the internal water passage, which then results in no water reaching outer nozzles 174b. In some arrangements, face seal 176 can include a separate gasket or other sealing component configured to facilitate a watertight seal between water inlet adapter 171 and brew mode selection knob 175. In other arrangements, the surfaces of water inlet adapter 171 and brew mode selection knob 175 can be sufficiently configured and arranged such that face seal 176 is formed simply by these surfaces pressing against each other.

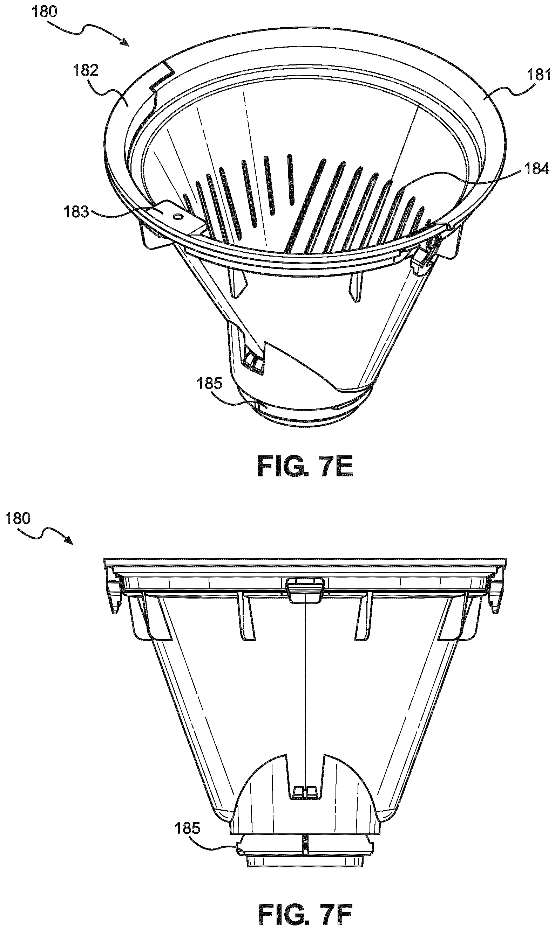

FIGS. 7E and 7F illustrate an example single serve basket 180 for a coffee brewer in front isometric and front elevation views respectively. Single serve basket 180 is shown here in additional views to provide further appreciation for its features and geometries. Single serve basket 180 can have a conically shaped bottom and can define a relatively smaller internal volume compared with batch basket 190. Again, single serve basket 180 can include upper flange 181, handle 182, designation tab 183, protruding ribs 184 along its sidewalls, and a spring loaded plunger 185 or other attachment at its bottom configured to prevent drips or leaks when the basket is not properly installed within the filter box.

Continuing further with FIG. 8A, an example filter box for a coffee brewer configured for a batch brew mode is illustrated in front perspective view. Filter box 160 can be identical or substantially similar to the filter box shown and described in FIG. 7A above except for those items that are reconfigured or replaced. Specifically, brew mode selection knob 175 can be rotated fully clockwise to a batch brew mode position, while batch basket 190 can replace the single serve basket within internal cavity 164 of filter box. Batch basket 190 can also be sized and shaped to fit snugly within a deep portion of internal cavity 164, and both batch basket 190 and the single serve basket detailed above can be readily removed from and installed into filter box 160. All other features of filter box 160 shown in FIG. 8A can remain the same as detailed above with respect to FIG. 7A.

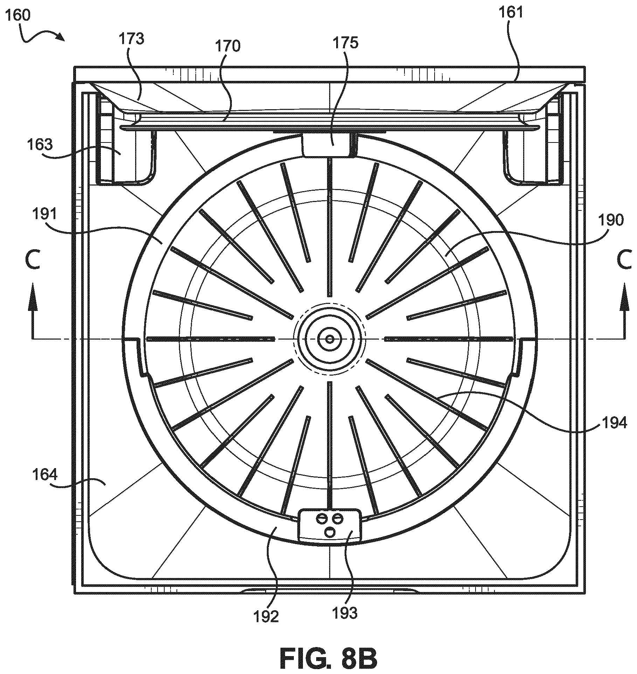

FIG. 8B illustrates in top plan view the filter box of FIG. 8A, which can similarly include many identical details as set forth above with respect to FIG. 7B. Again, differences in filter box 160 configured for batch brew mode shown in FIG. 8B can include the configuration of brew mode selection knob 175 and various details regarding batch basket 190. Unlike its fully counterclockwise rotational position shown in FIGS. 7A-7D above, the now fully clockwise rotational position of brew mode selection knob 175 can result in opening water flow to the second portion of nozzles such that all nozzles are open, as detailed below. Batch basket 190 can similarly have an upper flange 191 around its outer circumference but can be sized and shaped such that it defines a larger internal volume that is suitable for brewing a multiple serving batch of coffee or other brewed beverage therein. Batch basket 190 can also be configured for holding brewing materials therein, such as a paper filter and coffee grounds.

Batch basket 190 can similarly have a handle 192 coupled thereto, which handle can pivot between a horizontal position as shown and a vertically upright position to facilitate the easy removal of the basket from filter box 160. Handle 192 can similarly include a snap feature that keeps the handle locked at a horizontal position while installed into the filter box until a user actuates a release of the snap feature. A designation tab 193 at a top portion of handle 192 can show that basket 190 is a batch basket, such as by way of a triple dot designation for "batch" basket. In some arrangements, handle 192 can also be a distinctive color, such as green, for example, to further designate that this basket is for batch use. Batch basket 190 can also have thin protruding fins or ribs 194 along its sidewalls that provide the same functionality as the ribs in single serve basket 180 above. An arrangement or pattern for ribs 194 can be different than the arrangement or pattern for ribs 184 of single serve basket 180 to account for differences in the volume, weight, and flow tendencies of larger volumes of brewed coffee.

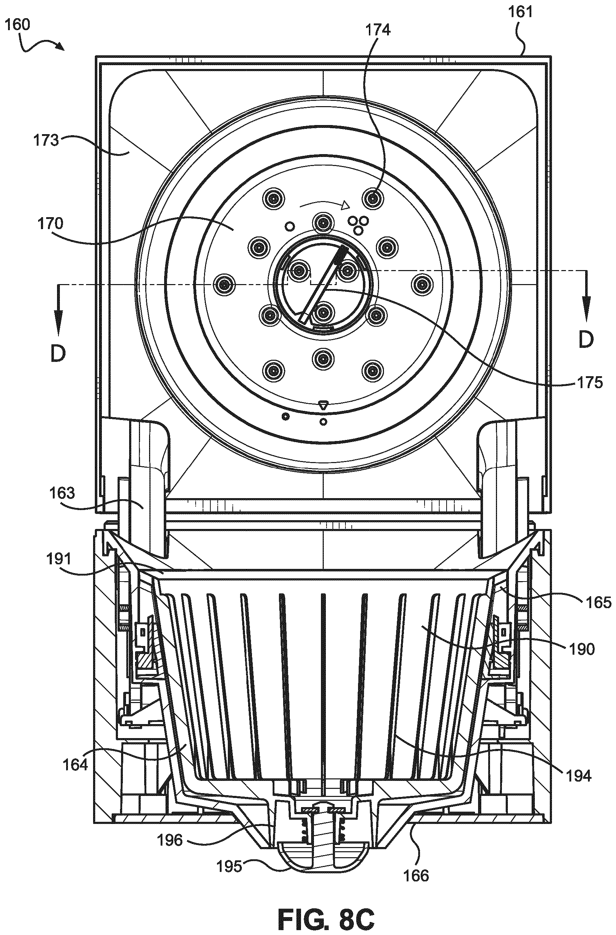

Moving along to FIG. 8C, the filter box of FIG. 8A is illustrated in front cross-section view along line C-C of FIG. 8B. Again, this effectively results in a cross-section view of the filter box proper but a front plan view of hinges 163 and open filter box lid 161. This front plan view of lid 161 is identical to the view shown in FIG. 7C with the exception of brew mode selection knob 175 being rotated fully clockwise such that its fin points toward the triple dot designation for batch brew. Again, a magnetic component and sensor arrangement can serve to detect the rotational position of brew mode selection knob 175 such that a processing component of the coffee brewer can intervene if the knob is improperly configured. As another example to those given above, if batch basket 190 is installed into filter box 160 but brew mode selection knob 175 is rotated counterclockwise to its single serve brew mode configuration, then the processing component can be configured to provide a user alert and refuse to proceed with brewing until a proper correction to the basket or selection knob is made by the user.

Detecting proper placement of batch basket 190 can also be facilitated by a similar sensor arrangement. Batch basket 190 can thus similarly include a magnetic component or other item at a different location than might be used for such a component on single serve basket 180 as noted above. For example, where single serve basket 180 might have a magnetic component located at a 10:00 position around the circumference of its upper flange 181, batch basket 190 could have a similar magnetic component located at a 2:00 position around the circumference of its upper flange 191. Again, both baskets can have a physical geometry such that there is only one possible arrangement or orientation for the basket to be fully inserted within internal cavity 164 of filter box 160, such that corresponding sensors located at internal cavity 164 can be arranged to detect the magnetic components or other items at their respective particular locations along their upper flanges (e.g., at 10:00 or 2:00). A sensor at each location where an identifying magnetic component or other item for a given basket can then detect the presence or absence of its corresponding sensor and communicate this information to a processing component of the coffee brewer that can then determine that a certain basket is installed into the filter box.

As shown in FIG. 8C, batch basket 190 can define an internal volume that is relatively large, such that only a small gap can exist between the sidewall(s) of the basket and the internal walls of filter box 160 that define a deep portion of internal cavity 164. Similar to the single serve basket above, one or more drain holes at the bottom of batch basket 190 can allow brewed coffee to flow out of the basket at the bottom of internal cavity 164. Due to the larger volumes of coffee brewed in batch mode, an alternative arrangement located at the bottom of batch basket 190 can help to prevent any leakage or spillage when a carafe or other removable container is not placed beneath filter box 160 during brewing in a batch brew mode.

In particular, batch basket 190 can have a spring loaded plunger 195 coupled to an attachment or other feature at a bottom portion 196 of the basket. When installed, bottom portion 196 at the bottom of batch basket 190 can similarly protrude through an outlet opening arrangement 166 at the bottom of filter box 160 to allow brewed coffee to be dispensed out the bottom of the filter box. Bottom portion 196 can include spring loaded plunger 195, which can be arranged to block all flow of coffee out of filter box 160 unless the plunger is actuated by pushing the plunger upward against the biasing force of its spring. As noted above, plunger 195 can be actuated by placing a proper coffee pot or carafe in place on the base of the coffee brewer beneath filter box 160. This can include removable container 140, which can have a removable lid 145 installed thereto with a hollow knob 146 protruding upward such that it can engage plunger 195 to actuate it and push it upward. Brewed coffee can then flow into container 140 through a vertical opening in the hollow knob when the plunger is actuated, as noted above.

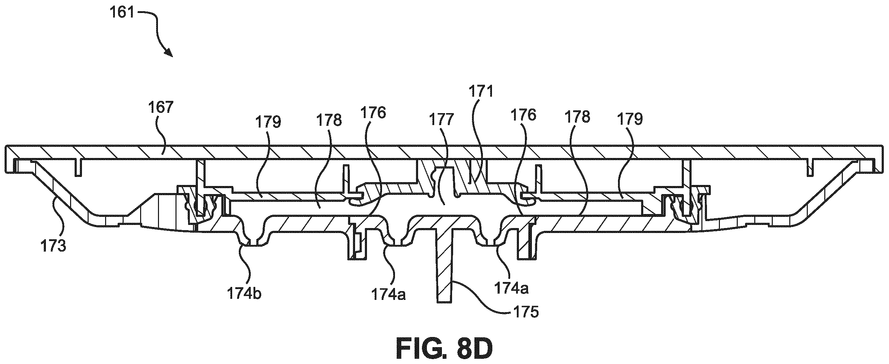

FIG. 8D illustrates an example filter box lid for a coffee brewer configured for a batch brew mode in front cross-section view along line D-D of FIG. 8C. Here, filter box lid 161 is shown as being configured for a batch brew mode such that all of its nozzles are open and hot water can be sprayed from all nozzles onto the brewing materials within the filter box. Some items shown in FIG. 8D can be identically arranged like those same items shown in FIG. 7D above, including top cover 167, showerhead housing 173, water inlet adapter 171, internal water passage inner portion 177, internal water passage outer portion 178, and showerhead backing plate 179, among other possible items and features.

Unlike the configuration shown in FIG. 7D above, brew mode selection knob 175 can be rotated to a batch brew mode position as shown in FIG. 8D, which can also result in rotating inner nozzles 174a located on the brew mode selection knob. Furthermore, rotating brew mode selection knob 175 to a batch brew mode position as shown can also cause it to move laterally away from water inlet adapter 171 such that the brew mode selection knob and water inlet adapter are not in contact, any separate face seal components 176 that may exist are rendered ineffective, and any seal between the knob and adapter is removed. Water is then free to flow from internal water passage inner portion 177 into internal water passage outer portion 178 through where a seal had been formed, such that outer nozzles 174b then receive water and are "open" when the seal between knob 175 and adapter 171 is broken. Of course, this seal can be reformed and outer nozzles 174b can be blocked when brew mode selection knob 175 is fully rotated the other direction to move knob 175 laterally back into contact with adapter 171.

In some arrangements, shutting off some of the nozzles, such as outer nozzles 174b as detailed above, can result in the remaining open nozzles becoming water jets due to increased pressure and fewer nozzles or outlets being used to relieve the pressure. This result can be used advantageously to facilitate agitation of the coffee bed or other brewing materials contained within the filter box. Pulsing the water supply through a reduced number of nozzles can further serve to agitate the brewing materials if desired.

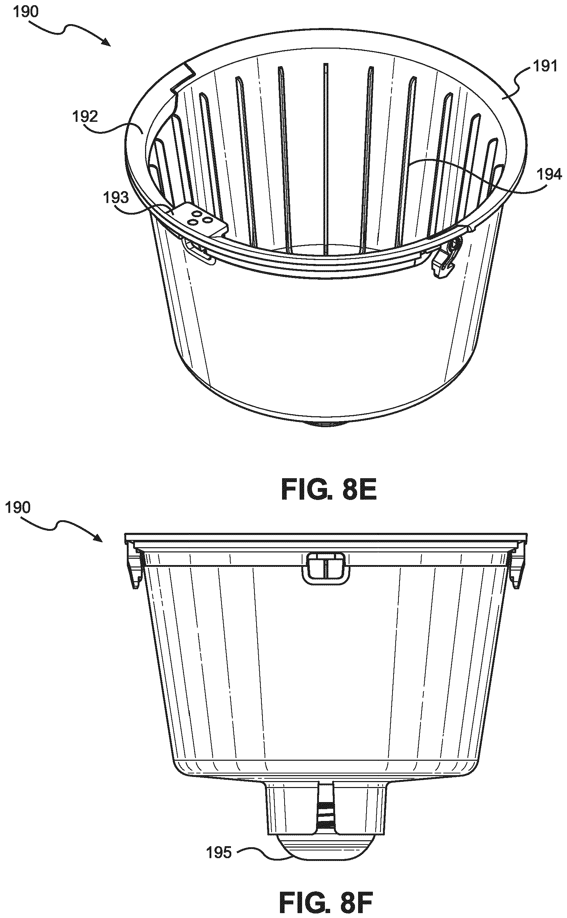

FIGS. 8E and 8F illustrate an example batch basket for a coffee brewer in front isometric and front elevation views respectively. Batch basket 190 is shown here in additional views to provide further appreciation for its features and geometries. Batch basket 190 can have a flat bottom and a relatively larger internal volume compared with single serve basket 180. Again, batch basket 190 can include upper flange 191, handle 192, designation tab 193, ribs 194 protruding from the inner surfaces of its sidewalls, and a spring loaded plunger 195 at its bottom.

### VARIABLE BLOOM AND BREW PHASES

In addition to the various components and features that provide for multiple different brew modes for single serve and batch brewing, the disclosed coffee brewer can also provide for sophisticated and widely variable bloom and brew phases to accommodate differences in coffee varieties and satisfy the preferences of every coffee enthusiast. This can allow users to select from a wide range of possible inputs and settings for many different bloom and brew parameters to provide a virtually limitless amount of customized possibilities by mixing and matching many different variable coffee preparation settings.

As is generally known, different coffee varieties can result in a need for different bloom and brew conditions in order to maximize brewed coffee quality for each specific coffee bean and blend. The ideal brew temperature for one coffee bean may be too hot or not hot enough for another coffee bean. This is similarly true for brew duration, bloom temperature, bloom duration, bloom water volume, and various other parameters and factors. In fact, given that bloom is intended to facilitate outgassing of any carbon dioxide trapped in the coffee prior to full brewing, ideal bloom parameters for a given amount of coffee grounds can even vary as those grounds naturally outgas on their own over time. This can result in less bloom being needed a week after grinding than immediately after grinding for the same coffee grounds. When also factoring in the taste preferences of every individual, the amount of customization needed for perfectly brewed coffee can require a tremendous amount of variation in many parameters and factors for both bloom and brew phases of coffee preparation.

Unfortunately, many existing coffee makers do not allow for much or any variation in any significant brew parameter, much less bloom parameter if such a function is even available. For example, simple coffee makers will have the same brew temperature and brew duration for every brew while not even providing any bloom functionality. Some coffee makers, such as pod based coffee makers, also draw the same volume of water for every brew with no variations. In such simpler coffee makers, as well as others that allow for some variation in one or more brew parameters or factors, a lack of consistency in these parameters or factors can also be a problem. For example, uncontrolled variations in brew duration or temperature can result in a lower quality of the brewed coffee. This lack of variability and consistency is a significant drawback for many existing coffee brewers and makers.

The disclosed coffee brewer overcomes these issues by providing customizable inputs for many bloom and brew parameters over highly variable ranges, as well as the ability to exert an extreme amount of control over brewing component operations and functions that can affect each of these user selected parameters during both bloom and brew processes of coffee preparation. This can be accomplished by way of an intelligent control system within the coffee brewer that is configured to control the operations of different brewing components and vary the operating conditions and outputs of these components dynamically during both bloom and brew phases of coffee preparation. Brewing components that can be controlled at such a high level by a resident intelligent control system can include a water pump and a heating component in particular, among other components within the coffee brewer.

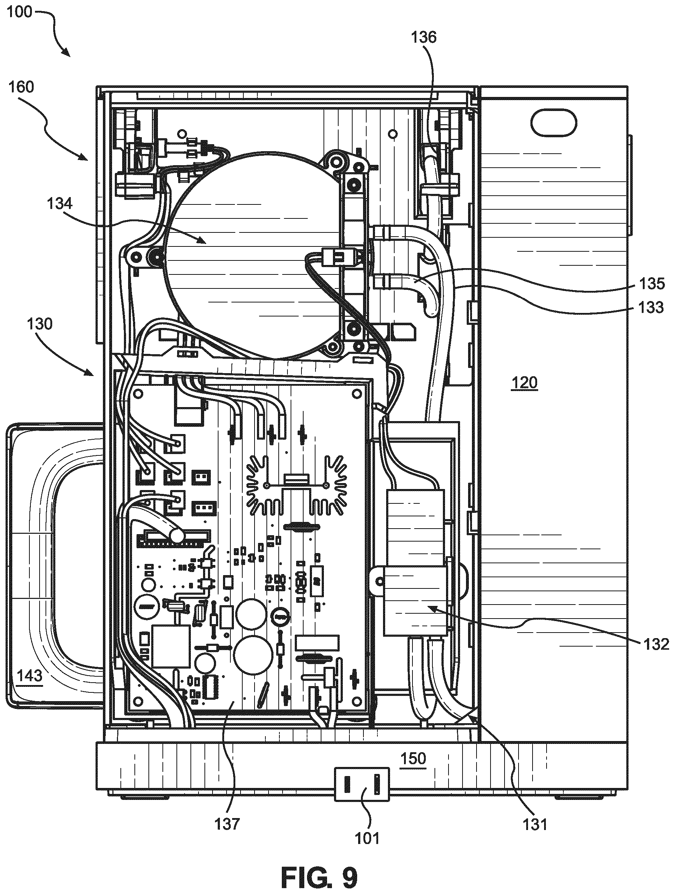

Transitioning to FIG. 9, an example coffee brewer with its rear panel removed is illustrated in rear elevation view. Coffee brewer 100 can be identical or substantially similar to the brewer shown and described in FIG. 1 above, albeit with a rear panel removed from pump and heater box 130. As noted above, coffee brewer 100 can include electrical cord 101, removable water tank 120, handle 143 of a removable container, base 150, and filter box 160 (primarily on the other side of pump and heater box 130), among other primary sections, components, items, and features. Pump and heater box 130 can contain various internal components and items, which can include cold water inlet 131, water pump 132, pump to heater water line 133, heating component 134, heater outlet water line 135, hot water outlet 136, and control region 137, among other internal components, items, and features.

Cold water inlet 131 can pull cold or warm water from water tank 120, and hot water outlet 136 can feed hot water into the showerhead within filter box 160. One or more sensors or monitoring devices located at or about cold water inlet 131 and hot water outlet 136 can detect the temperatures and/or flow rates of water passing through these items or their associated water lines. Water pump 132 can be a diaphragm pump configured to be controlled dynamically by way of pulse width modulation ("PWM") over a proportional-integral-derivative ("PID") loop or control arrangement, for example, although other types of pumps and control arrangements are also possible. In a specific example, water pump 132 can be a DP-2 series pump made by CNHT of Shenzhen, China. Heating component (i.e., "heater") 134 can be a thick film flash heater with built in negative temperature coefficient ("NTC") functionality (i.e., having an integrated NTC component) configured for continuous water flow therethrough as modulated by the water pump and can also be configured to be controlled dynamically by PWM over a PID loop, for example, although other types of heaters and control arrangements are also possible. A thick film flash heater can be used rather than a thermoblock or other flash heating device since the extremely low thermal mass of a thick film heater can allow for better control and faster changes in its outlet hot water temperature while being dynamically controlled during flow through water heating. In a specific example, heating component 134 can be a FTH-2 series heater made by Ferro Techniek of Gaanderen, The Netherlands.

Control region 137 can include various processors, printed circuit boards ("PCBs"), and associated firmware, electronic components, and circuitry that combine to provide an intelligent control system for coffee brewer 100. At least one processor can be configured as a central processing unit ("CPU") that can be responsible for primary control of overall coffee brewer operations. Such a CPU and/or various other processors can contain firmware configured for specific control of water pump 132 and heating component 134, as well as associated sensors, feedback loop devices, input devices, output devices, and other coffee brewer components. The various components of control region 137 can be referred to individually or collectively in any combination as a logic based "processing component" as may be appropriate. Furthermore, any other electronic item within or associated with coffee brewer 100 that may be outside of control region 137 but that still provides control processing functionality for the coffee brewer may also be referred to as a "processing component" as may be appropriate.

In various arrangements, control region 137 and associated devices and components can provide an intelligent control system for coffee brewer 100. This can include hardware and firmware that can collectively be configured to monitor and detect changes in water flow, water temperature, and other operating conditions from the water tank to the showerhead and all items in between, such as water pump 132 and heating component 134 in particular. The intelligent control system can also be responsible for control of and communication with other coffee brewer components and items, such as user input components, output displays and components, sensors within and about water tank 120, sensors within and about the showerhead and filter box 160, and sensors within and about base 150, among other items, as will be readily appreciated.

As one example, one PCB or a portion thereof in control region 137 can include one or more processors, one or more memory devices, one or more communication interfaces, one or more passive components, and/or other supporting electronic components and features configured to monitor the cold water temperature and flow rate at cold water inlet 131, the hot water temperature and flow rate at hot water outlet 136, and the electrical current consumed by these and other system components during a coffee preparation process. This can be done using one or more suitable temperature sensors and flow meters placed at appropriate locations and coupled to the PCB or other processing component(s) within control region 137, for example.

Various algorithms in firmware and/or other processors on the PCB or elsewhere can be configured to monitor for any significant changes in water temperatures, flow rates, current consumption, or the like, and these and/or other algorithms in firmware can then dynamically compute adjustments needed in the operating conditions of the pump, heater, and/or any other system component in real time and communicate instructions to the pump, heater, and/or other relevant system component to alter dynamically their ongoing outputs accordingly. This can result in precisely controlled water temperatures and flow rates within the system, as detailed below. In some arrangements, the intelligent control system in control region 137 can include specific firmware and algorithms that are programmed to account for the physical characteristics and parameters of water pump 132 and heating component 134, as well as to control operation of these devices dynamically with rapid incremental adjustments as needed. Firmware algorithms can determine a lower threshold for volumetric flow rate for a given set of user selected coffee preparation settings using the known physical characteristics and parameters of the pump and heater and can then control pump operations to ensure that this lower threshold is not crossed during any phase or subphase of a coffee preparation process. Firmware algorithms can also determine the maximum flow rate that water can be pumped through heating component 134 while maintaining a constant outlet temperature based on the known physical characteristics and parameters of the heater and can control operation of water pump 132 to pump water at or just below this flow rate when the maximum possible flow is desired for a given phase or subphase of coffee preparation.

Providing a substantially constant hot water temperature at a specifically selected temperature for an ongoing flow of water can be challenging, and most existing coffee brewers do not even attempt to control for a constant or even a specifically selected water temperature. As will be readily appreciated, however, the quality of a brewed coffee product can suffer when the brew water temperature is too high, too low, or varies over the course of coffee preparation. For example, high quality coffee can be brewed by maximizing water flow rate at a temperature at or about 99° C for many coffee bean varieties. Using a flash heating component to brew coffee can provide added challenges with hot water temperature setting and control. When using a flash heating component that heats water continuously flowing therethrough, there is typically a lower threshold for volumetric flow rate that can affect hot water outlet temperature significantly. When water flow decreases below that lower threshold for volumetric flow rate, then the hot water outlet temperature can spike significantly, which can obviously result in a bad brew and poor coffee quality.

Various components, arrangements, and control processes in the disclosed coffee brewer 100 can overcome these challenges in providing hot water for coffee preparation at significant volumes and flow rates while maintaining a constant temperature. This can be accomplished in some arrangements by using a "dual control" temperature regulation process that involves controlling operations of both the water pump and heating component dynamically and simultaneously. Controlling operations of these two components can involve adjusting the power output of water pump 132 to alter the flow rate of water being pumped therefrom, for example, as well as adjusting the power output of heating component 134 to alter the amount of heat delivered to water flowing therethrough. Adjusting one or both of these power outputs during an ongoing process can then result in altering the water temperature at hot water outlet 136, since the water flow rate and the heat delivered to water flowing through the heating component both affect the hot water temperature exiting the heating component before moving to the hot water outlet.

This dual control temperature regulation process can be facilitated by the use of pump and heating components that can be dynamically controlled using rapidly changing control inputs and that can also provide rapid output adjustments to quickly realize effective results. As noted above, this can involve the use of a diaphragm pump and a thick film flash heater, one or both of which can be controlled dynamically using PWM over a PID loop that can include a processing component in control region 137, for example, which processing component can be considered as part of an overall intelligent control system. Other types of water pumps, heating components, control arrangements, and/or other system components can be used alternatively or in addition to the foregoing specific example types, arrangements, and components to implement a dual control temperature regulation process as disclosed herein, and it will be understood that any such other items can alternatively or also be used as may be appropriate.

In various arrangements, the disclosed dual control temperature regulation process can involve adjusting the power outputs of both the water pump and the heating component simultaneously for a combined result of altered water flow rate and altered heat delivery that also achieves a desired alteration to water temperature at hot water outlet 136. Various algorithms in firmware and/or one or more other processors in control region 137 or elsewhere can be used to determine appropriate adjustments to the power outputs for both the water pump and the heating component to be made simultaneously for a desired alteration in hot water outlet temperature. As will be readily appreciated, an altered water flow rate at the water pump will also change other process parameters, such as overall water volume delivered, and the intelligent control system can account for these changes when adjusting operations of both the water pump and the heating component to alter the hot water outlet temperature. Conversely, when a change in water flow rate is desired by the intelligent control system during coffee preparation, such as during a water pulsing process or a transition between preparation phases or subphases, then the power output of the water pump can be adjusted accordingly and a corresponding change can be made simultaneously at the heating component by adjusting its power output such that the same hot water outlet temperature is maintained before and after the desired water flow rate change.

One or both simultaneous alterations to water flow rate and heat delivery can be incremental in nature, such that power output adjustments to the water pump and heating component and also resulting alterations in hot water outlet temperature can also be incremental in nature. Many such incremental adjustments or alterations can be implemented in rapid succession over short time intervals to result in a greater overall alteration of the water temperature where desired. In some situations, firmware algorithms can be used to calculate or recalculate different power output adjustments for one or both of the water pump and heating component for each such incremental adjustment in a series of incremental adjustments.

As will be readily appreciated, a desired temperature alteration can be determined based on an existing temperature and a target temperature. The existing temperature can be that which is detected and communicated by a temperature sensor at hot water outlet 136, for example, while the target temperature can reflect a desired hot water temperature, such as a user selected water temperature setting for a given phase or subphase of coffee preparation. When an existing temperature is detected as being different than a desired or target temperature, then the system (i.e., a relevant processing component) can determine whether the temperature difference is significant. A threshold amount of difference to be significant can be set at 0.1° C, for example, although higher or lower values can be used. When the temperature difference between existing and target is significant, then the dual control temperature regulation process can result in the power outputs of both the water pump and heating component being adjusted until a sufficient alteration is made in the existing temperature to bring it back to the target temperature. During continuous delivery of hot water at hot water outlet, this can result in a cycle of maintaining constant power outputs followed by adjusting power outputs then back to maintaining constant power outputs for the water pump and heating component depending on the threshold amount set for a significant temperature difference and any system or environmental conditions that cause changes in the delivered hot water temperature.

The foregoing dual control temperature regulation process can be used during any ongoing phase or subphase of a coffee preparation method or process while hot water is being continuously delivered at hot water outlet 136 into the showerhead. This can result in the system being configured to provide a substantially constant hot water exit temperature - as that may be defined by any relevant threshold amount being reached for a significant difference between an existing temperature and a target temperature before the control system will cycle to adjusting the existing temperature back toward the target temperature. As such, a substantially constant hot water exit temperature can be considered a hot water exit temperature that stays within a significant difference from a target water temperature.

This dual control temperature regulation process (e.g., detecting, monitoring, adjusting, altering) can also be used at system startup or initiation at the beginning of a coffee preparation process, which can include water pump and/or heating component initiation. One or more additional steps or considerations can be taken at system startup or initiation, which can involve the need to heat water to a target or desired hot water temperature without any system component or water in the system already being hot or significantly warm. In such startup or initiation situations, one or more specific ramp algorithms in firmware can be used to help bring initial portions of cold water up to the target temperature quickly. This can involve controlling the initial water flow rate to be relatively slow to provide greater heat transfer within the heating component during initial water flow therethrough, which can prevent or limit the amount of any water entering the showerhead that is not at the target water temperature. Coffee brewer 100 thus does not initially pump cold or warm water into its showerhead for the first few seconds of coffee preparation, with such cold water introductions being common in many other coffee brewers and systems. Once the target water temperature is reached using the ramp algorithms, then the water flow rate can be increased as desired up to a maximum possible flow rate.

Another example of system controlled features provided by a resident intelligent control system of coffee brewer 100 can include accounting for fluctuating or variable voltage during a coffee preparation process. As is generally well known, power delivered from a standard electrical supply on a typical power grid can include an uncertain, uncontrolled, and even fluctuating voltage, typically between 110-120 volts or between 100-127 volts on many public power grids. This uncertain or fluctuating voltage in a power supply can affect operations and outputs of various electrically powered items, such as a water pump and heating component, such that the inconsistent input voltage may result in hot water temperature inconsistencies or variations. In some arrangements, a suitable voltage controller can be included within a coffee brewer or other electrical device, which can provide some relief from input voltage uncertainty.

Alternatively, or in addition, one or more system components or firmware algorithms can account for input voltage uncertainty by controlling and adjusting operations of the water pump and heating component without regard to input voltage. For example, the various components and control arrangements detailed above can account for input voltage uncertainty by providing an overall system that does not need to know or control the exact input voltage to the coffee brewer. Rather, the resident intelligent control system of coffee brewer 100 can monitor water temperatures, flow rates, and other system parameters and modulate dynamically and incrementally pump flow rate and heating element power output in response to the monitored parameters rather than any uncertain input voltage.

As detailed above, the disclosed water pump, heating component, and associated dual control temperature regulation process can result in significantly high levels of control and precision for water flow and water temperature within coffee brewer 100. This can allow for providing a wide range of variability for multiple coffee preparation parameters, which can include parameters for separate bloom and brew phases of coffee preparation. The resident intelligent control system of coffee brewer can be configured to control the operations and outputs of the water pump, the heating component, and any other system components using any of the above dual control temperature regulation processes as needed to allow for variable bloom phase parameters such as bloom duration, bloom water volume, and bloom water temperature, as well as variable bloom phase parameters such as brew duration, brew water volume, and brew water temperature, among other possible bloom and brew parameters.

In various embodiments, control region 137 of coffee brewer 100 can be configured to accept user inputs for customizable bloom and brew phases of coffee preparation. Such user inputs can be accepted by way of a user input component on the brewer, such as input knob 111, which can also serve as a brew mode selection knob in some arrangements. These user inputs can be communicated to the intelligent control system of control region 137, which in turn can control operations of water pump 132 and heating component 134 to effect exact water delivery conditions that meet the bloom and brew settings selected by the user. For a given coffee preparation session (i.e., one bloom and brew phase in either single serve or batch brew mode), a user can select and provide user inputs for a brew phase as well as an optional bloom phase if desired. User inputs can reflect user selected values or settings from a range of possible values or settings for bloom duration, bloom water volume, bloom water temperature, brew duration, brew water volume, and/or brew water temperature, among other possible settings as may be desired by the user. In the event that no particular setting is selected by the user for a given bloom or brew parameter where selection is available, the intelligent control system can provide a default setting for that parameter, which default setting may be a constant setting or may be determined based on other bloom phase, brew phase, and/or brew mode parameters.

Each of these settings or coffee preparation parameters can be variable from one user to another and from one coffee preparation session to another. Some or all of these settings can be separately selected and independent from each other, such that different phase durations, water volumes, and water temperatures can be selected for separate bloom and brew phases. For example, a given coffee preparation session can involve selections and settings for a batch brew mode, a bloom duration of 30 seconds, a bloom water volume of 100 ml, a bloom water temperature of 95° C, a brew duration of 3 minutes, a brew water volume of 600 ml, and a brew water temperature of 99° C, among a wide variety of other settings and combinations. Coffee brewer 100 can also allow a user to select various coffee preparation settings from a range of variable settings for a coffee preparation session and then store all of the selected settings into a customized brew profile. A user can then select the stored customized profile at a later time for a future coffee preparation session using all of the selected settings.

In various embodiments, coffee brewer 100 can also provide water jet pulsing at the showerhead, which can be made available and controlled by multiple rapid stops, starts, and other adjustments to the water pump power output, for example, in order to interrupt and restart water flow in a pulsing fashion. Water jet pulsing settings can also be selected from a range of variable possible selections in such arrangements, and such settings can include for example, number of pulses, single pulse duration, pulse frequency (i.e., time between pulses), pulse water temperature, and/or overall pulsing duration, among other possible pulse settings and parameters. Water pulsing can serve to agitate or stir up the bed of brewing materials and can be provided as part of a bloom phase, brew phase, or both.

Various embodiments of coffee brewer 100 can also include further features and functions. For example, coffee brewer can be configured to detect the exact amount of water contained within water tank 120. This can be useful for several purposes, such as to be able to determine whether certain settings that involve water volume can be fulfilled for a given coffee preparation session, for example, as well as to provide display outputs to a user regarding the water volume in the water tank and user alerts if there is not enough water in the water tank for a proposed bloom phase or brew phase. In some arrangements, the intelligent control system of the coffee brewer can even be configured to refuse to proceed with the next bloom phase, brew phase, or overall coffee preparation session if there is not enough water in the water tank to finish the next phase or overall session at the current settings. Options can also be provided for a user to override the refusal to proceed, to change any relevant water volume settings, or simply to accept a prompt to add more water into the tank.

These features and functions can be facilitated by providing a water level sensing arrangement in the coffee brewer. The intelligent control system can be configured to determine the exact water volume in the water tank based on the tank water level detected using such a water level sensing arrangement by correlating tank water level with tank water volume based on known tank parameters. Water level sensing can be accomplished in multiple different ways, such as by including one or more capacitive sensors, pressure sensors, and/or other types of sensors or items that can be strategically located at or about the water tank and arranged to detect capacitance, pressure, and/or other parameters that can then be used to determine the water level and thus the exact water volume in the water tank.

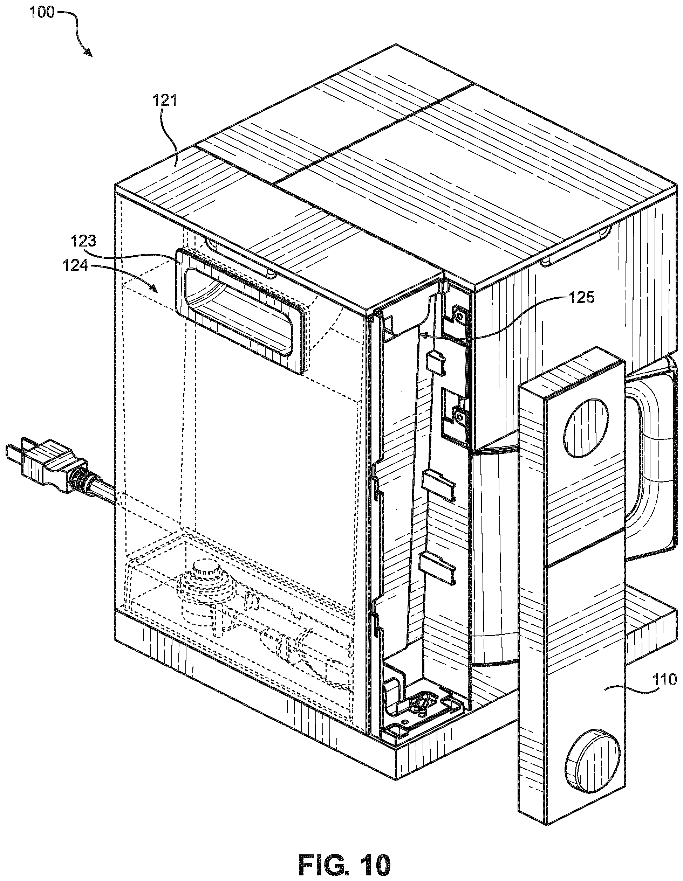

FIG. 10 illustrates in side perspective view an example coffee brewer with its front control box removed. Coffee brewer 100 can be identical or substantially similar to the brewer of FIG. 1 above to the extent that this brewer can include a capacitive sensing arrangement for water level sensing. Again, coffee brewer 100 can include a removable water tank that can include water tank lid 121 that can pivot open and closed and also handle 123 that can facilitate removal and installation of the water tank, among other items and features. An exact water level 124 of water contained within the water tank can be detected by way of one or more capacitive sensors 125 located behind front control box 110 and arranged along a side of the water tank. Although front control box 110 is shown as being removed to depict an example location for a capacitive sensing arrangement, it will be understood that the front control box may not be readily removable by a user during typical coffee brewer use.

In some arrangements, a flexible printed circuit ("FPC") for one or more capacitive sensors 125 can be located along a tank support wall that abuts and contacts the water tank when the water tank is installed but that remains in place within the coffee brewer behind front control box 110 when the water tank is removed. This FPC can be adhered to a front side of the tank support wall using a pressure sensitive adhesive, for example, and the FPC and tank support wall can be arranged such that the FPC can detect capacitance within the water tank through the tank support wall and sidewall of the water tank. The FPC can be arranged along the tank support wall to span from the lowest possible water level to the highest possible water level such that capacitance levels can be detected all along the FPC from top to bottom.

As will be readily appreciated, capacitance where water is present within the tank will be different than capacitance where water is not present above any given water level 124, such that the exact water level can be determined by using the capacitance sensed at multiple locations along the height of the water tank. Capacitance data from the FPC detected at multiple height locations along the water tank can be communicated to the intelligent control system of the coffee brewer, which can then use this data to determine the water level of and thus the water volume held within the water tank.

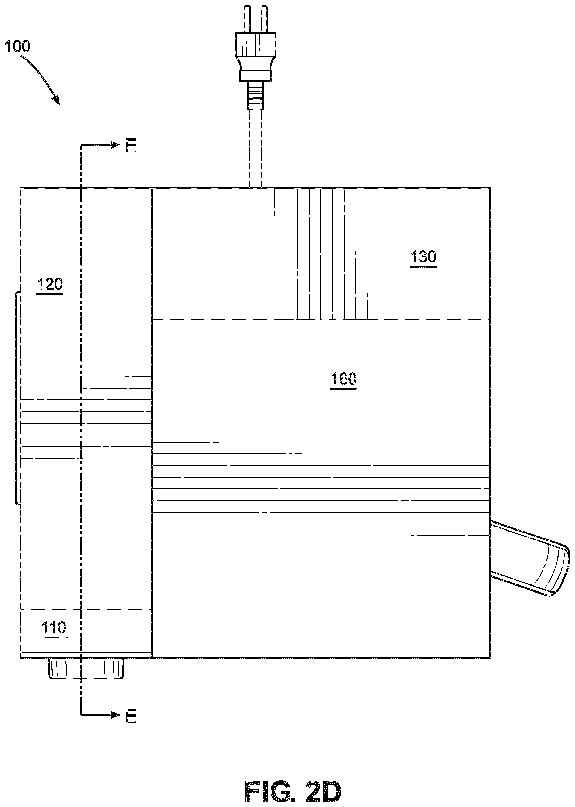

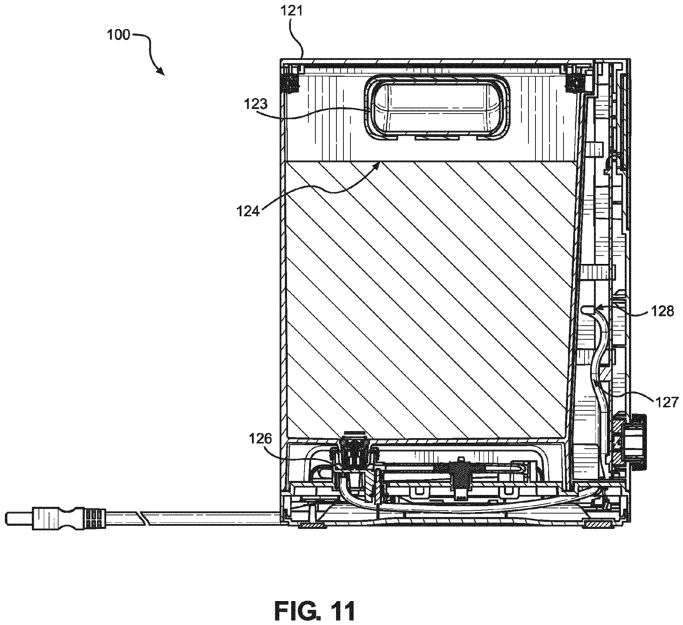

FIG. 11 illustrates an example coffee brewer in side cross-section view along line E-E of FIG. 2D. Coffee brewer 100 can be identical or substantially similar to the brewer of FIG. 1 above to the extent that this brewer can include a pressure sensing arrangement for water level sensing. Such a pressure sensing arrangement can be implemented alternatively or in addition to the capacitive sensing arrangement of FIG. 10 above. Again, coffee brewer 100 can include a removable water tank having a water tank lid 121, handle 123, and water level 124 that can rise or fall based on the volume of water in the tank. The exact water level 124 can be determined by way of a pressure sensing arrangement that can detect pressure at the bottom of the water tank, with such a detected pressure reflecting the water level and water volume in the tank.

A suitable pressure sensing arrangement can include an air to water interface 126 beneath the bottom of the water tank, an air filled tube 127 coupled at one end to the air to water interface and at the other end to a surface mount technology ("SMT") pressure sensor (not shown), and the SMT pressure sensor itself. The SMT pressure sensor can be mounted to a PCB located within control region 137, for example, and can be configured to provide data to a relevant processing component within the control region. The air filled tube 127 can be routed such that it exits the water tank area through an opening 128 in a water tank support wall between the water tank and front control box as shown, although other routing arrangements are also possible. A compressible air column within air filled tube 127 can be used to detect water pressure at the bottom of the water tank and the detected water pressure can be used to determine the exact water volume in the tank, as will be readily appreciated.

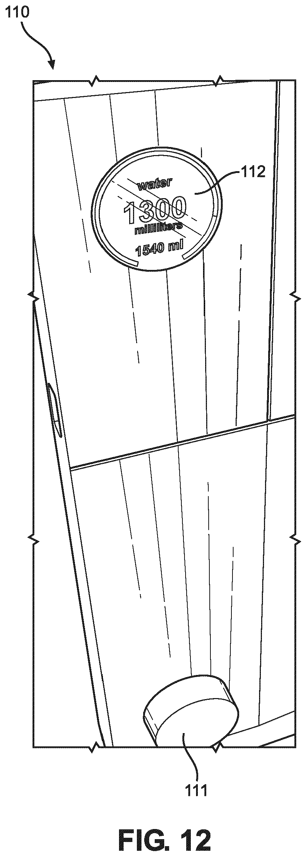

Moving next to FIG. 12, an example front control box of a coffee brewer is shown in front perspective view. As noted above, front control box 110 can include input knob 111 at a lower portion thereof and output display 112 at an upper portion thereof. One or more additional input and/or output components can be provided in alternative coffee brewer embodiments as may be desired for alternative brewer designs. Input knob 111 can be configured to rotate in both directions to accept some user inputs and can also be configured to be pushed inward like a button to accept other user inputs. For example, input knob 111 can be rotated by a user to move through a range of variable settings for a given coffee preparation parameter, and then pushed in by the user to select the setting that is highlighted or displayed.

In addition to the variable bloom and brew phase settings noted above, a user can also use input knob 111 to select various other settings, inputs, functions, and items. These can include, for example, a coffee roast level, a water to coffee brew ratio (e.g., 16:1), and a bloom ratio, as well as clock, timer, and other machine modes and functions. In some arrangements, a user can input selections for a desired brew ratio and a desired volume of water to use during a brew phase, and the system can then provide an output display indicating an exact weight of coffee grounds to be used. As another example, a user can choose an autoselect mode using input knob 111, which autoselect mode can result in the coffee brewer using all of the water in the water tank for a brew phase of a batch brew mode. Other similar functions and interactions between the user and the intelligent control system are also possible.

Output display 112 can be used to provide a wide variety of information to a user. This can include a clock function, various coffee brewer statuses, user setting selections, and dynamically updated displays during a variable bloom phase, variable brew phase, or any other part of a coffee preparation session, among other possible display functions and information. For example, outlet display 112 can show exactly how much water is in the water tank. When the water tank is removed, the outlet display can indicate that the tank is removed and/or that no water is present. While bloom phase or brew phase parameters are being selected by a user, outlet display 112 can show the existing water volume in the water tank and can also indicate if there is not enough water for the selected parameters. For example, if a user selects a water volume of 800 ml for a batch mode brew phase but the water tank only has 300 ml of water, then outlet display 112 can provide a user alert to this effect and also show the actual water volume.

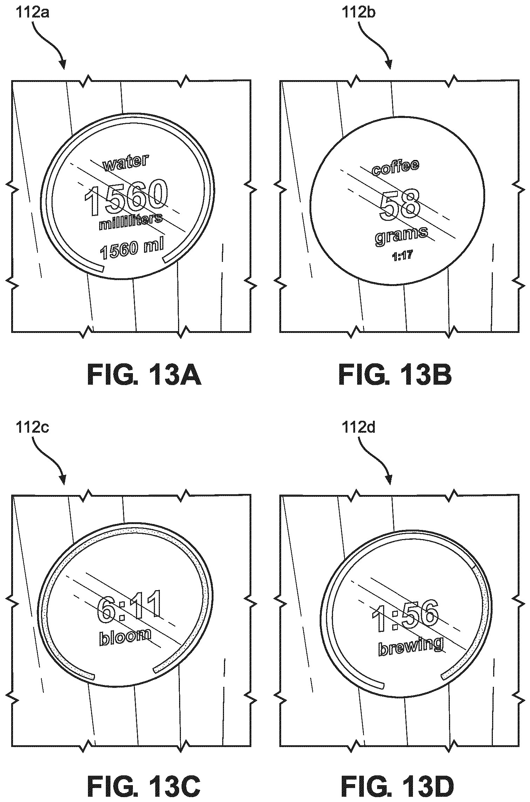

FIGS. 13A-13D illustrate in front plan view example output displays for a front control box of a coffee brewer. Output display 112a of FIG. 13A can show an actual water level detected in the water tank as well as the water tank capacity. An overall water capacity of the water tank can be "1560 ml," for example, which can always be displayed in a small font at the bottom of output display 112a, while the actual water volume detected can be presented in a larger font toward the center of the display. As shown, a full water tank can be reflected as "1560 milliliters" at the center of output display 112a. An illuminated ring around the outside of output display 112a can be increased or reduced to match the fill level of the tank. Other display arrangements are also possible for output display 112a directed toward water tank volume and maximum capacity.

Output display 112b of FIG. 13B can show the weight of coffee grounds (or other brewing material) to be brewed within the coffee brewer as well as a desired coffee to water ratio. Both of these items can be selected by a user or can be determined by the system based on other settings or factors and then displayed for the user. For example, a user can be prompted to select a brewing ratio after having input a desired brew water volume. The selected brewing ratio can be displayed in a smaller font toward the bottom of output display 112b (e.g., "1:17"), and the weight of coffee grounds needed for the brew can be displayed in a larger font toward the center of output display 112b (e.g., "coffee 58 grams"). The weight of coffee grounds needed can be calculated by the system based on the user inputs for brew water volume and brew ratio. The user can then take this displayed weight needed information to weigh out the right amount of coffee grounds and place them into the filter box for that coffee preparation session. In some arrangements, the brewing ratio can carry over from the last brew unless a user decides to adjust the brewing ratio. In some arrangements, output display 112b is optional and can be skipped, such as where a user does not wish to weigh the coffee precisely and only wants to select a specific volume of water to be used.

Output display 112c of FIG. 13C can show a clock or countdown timer and also a "bloom" indication. For example, a countdown timer of 6:11 can reflect that a given process, phase, or overall coffee preparation session will start or end in 6 minutes and 11 seconds. This can be, for example, a countdown timer to let a user know when coffee will be ready to drink. The "bloom" indication can reflect that an optional bloom phase has been selected for the current session and/or that the current phase of coffee preparation is a bloom phase. Various bloom parameters can also be displayed if desired, which can include a selected bloom volume, bloom duration, and bloom water temperature, for example.

Output display 112d of FIG. 13D can show a countdown timer for a brewing phase that is in process. A timer showing the minutes and seconds left for a brewing phase in process can be shown in a larger font toward the center of output display 112d (e.g., "1:56 brewing"), while an illuminated ring around the outside of output display 112d can be reduced in animated fashion as brewing progresses until no illuminated ring is left. Alternatively, the illuminated ring can be presented in different colors or illumination intensities to reflect total brewing time and brewing time remaining. While only four examples of output displays have been provided, it will be readily appreciated that many other features and parameters can be displayed at output display 112, and that additional output displays and/or other output devices can be present on a given coffee brewer.

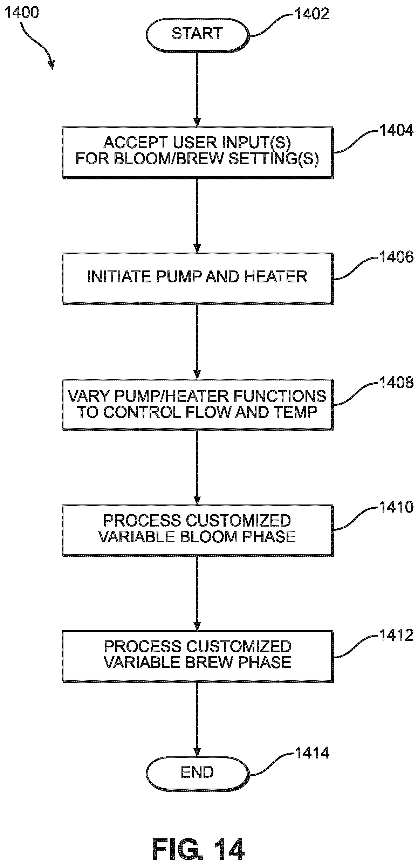

Finally, FIG. 14 provides a flowchart of an example method of brewing coffee with variable bloom and brew phases. Method 1400 can represent a broad overview of steps that can performed by a coffee brewer, and it will be understood that various other steps, features, and details of such a broad overview method are not provided here for purposes of simplicity. Some or all of the steps in method 1400 can be performed automatically by the coffee brewer for a given application, and it will be understood that other steps and functions of an overall method of brewing coffee with variable bloom and brew phases can be performed by a user, such as for preparation steps and/or by manual intervention where desired for some situations.

After a start step 1402, a first process step 1404 can involve accepting one or more user inputs for coffee preparation settings. These can include variable bloom phase settings, variable brew phase settings, or both. Variable bloom phase settings can include variable settings for bloom duration, bloom water volume, and bloom water temperature, among other possible variable settings. Variable brew phase settings can include variable settings for brew duration, brew water volume, and brew water temperature. Each of these settings for bloom and brew phases can be different, such as different bloom and brew temperatures, for example. The user inputs can be customized for a given user as selected by that user and can be individually input manually or can be part of a saved profile for a given bloom and brew process. Process step 1404 can be performed automatically by the coffee brewer, such as by automatically detecting and accepting inputs at an input knob or other user input component on the brewer.

A following process step 1406 can involve initiating a pump and a heating component in the coffee brewer. The pump can be a diaphragm pump that is controlled dynamically by way of pulse width modulation and the heating component can be a NTC thick film flash heater configured for constant water flow through as modulated by the pump, such as the pump and heating component detailed above. Initiating the pump and heating component can occur after all user inputs are made and coffee production is to begin. Process step 1406 can be performed automatically by the coffee brewer, such as by automatically initiating pump and heater operations when coffee production is set to begin.

The next process step 1408 can involve varying pump and heater functions to control the flow and temperature of the water. This can be done to ensure that hot water delivered into the showerhead is maintained at a constant temperature despite any water or system changes during processing. This can also be done to reflect any water flow changes needed in view of the particular bloom or brew phases being conducted, such as water flow duration or pulsing. Process step 1408 can be performed automatically by the coffee brewer, such as by automatically varying the pump and heater functions in response to feedback from one or more sensors or other system components, or to match the user inputs regarding what is desired for bloom and brew parameters, or both.

Process step 1410 can then involve processing a customized variable bloom phase where a user has selected a bloom phase and customized bloom parameters for the overall coffee brewing method. This can involve adjusting the heating component power output as needed and pumping water through the heating component for a selected time duration at an appropriate flow rate to achieve a selected bloom water volume and reach a selected hot water bloom temperature as the water reaches the showerhead. This can also involve pulsing the pump and adjusting the heating component power output as needed to reflect any pulse parameters selected for the bloom phase. Process step 1410 can be performed automatically by the coffee brewer, such as by automatically controlling the pump and heater functions as needed over the course of the bloom phase to meet the selected bloom parameters.

The next process step 1412 can involve processing a customized variable brew phase where a user has selected customized brew parameters for an overall coffee brewing method. This can also involve adjusting the heating component power output as needed and pumping water through the heating component for a selected time duration at an appropriate flow rate to achieve a selected brew water volume and reach a selected hot water brew temperature as the water reaches the showerhead. This can also involve pulsing the pump and adjusting the heating component power output as needed to reflect any pulse parameters selected for the brew phase. Process step 1412 can be performed automatically by the coffee brewer, such as by automatically controlling the pump and heater functions as needed to meet the selected brew parameters. The method can then end at end step 1414.

For the foregoing method 1400, it will be appreciated that not all process steps are necessary, and that other process steps and details may be added. Furthermore, the order of steps may be altered in some cases, and some steps may be performed simultaneously. For example, step 1408 may be performed simultaneously with step 1410 and/or step 1412 in some arrangements. Other possible process steps and details can include sensing cold and hot water temperatures, water flow rates, and other operating conditions, accepting further user inputs during bloom phase or brew phase processing, providing display outputs during bloom and brew phases, and providing output alerts such as brewing complete, lack of sufficient water, or other error conditions, among other possible steps. Further variations and extrapolations of method 1400 will be readily appreciated by those of skill in the art.

Although the foregoing disclosure has been described in detail by way of illustration and example for purposes of clarity and understanding, it will be recognized that the above described disclosure may be embodied in numerous other specific variations and embodiments without departing from the scope of the appended independent claims. Certain changes and modifications may be practiced, and it is understood that the disclosure is not to be limited by the foregoing details, but rather is to be defined by the scope of the appended claims.

### EXAMPLES

Example 1: A coffee brewer, comprising:
a main body having an outer housing containing a plurality of internal components;
a user input component disposed at the outer housing and configured to accept user inputs regarding coffee preparation settings; and
a processing component disposed within the main body and coupled to the user input component, wherein the processing component is configured to:
   accept automatically user inputs from the user input component regarding coffee preparation settings, wherein the coffee preparation settings include variable bloom phase settings, variable brew phase settings, or both,
   process automatically a bloom phase within the coffee brewer according to any specific bloom phase settings input by the user, and
   process automatically a brew phase within the coffee brewer according to any specific brew phase settings input by the user.

Example 2: The coffee brewer of example 1, wherein the variable bloom phase settings include variable settings for bloom duration, bloom water volume, and bloom water temperature.

Example 3: The coffee brewer of example 2, wherein the variable brew phase settings include variable settings for brew duration, brew water volume, and brew water temperature.

Example 4: The coffee brewer of example 3, wherein the coffee brewer is configured to accept and process a user input brew water temperature that is different than a user input bloom water temperature.

Example 5: The coffee brewer of example 1, further comprising:
a water tank coupled to the main body.

Example 6: The coffee brewer of example 1, further comprising:
a water level sensing component located at the water tank and coupled to the processing component, wherein the water level sensing component is configured to detect the exact volume of water in the water tank and communicate that information to the processing component.

Example 7: The coffee brewer of example 5, further comprising:
a display component disposed at the outer housing and configured to display information regarding coffee preparation, wherein the processing component is coupled to the display component and is further configured to provide automatically display information to the display component during a user input process, a bloom phase process, and a brew phase process.

Example 8: The coffee brewer of example 7, wherein the display information includes a bloom duration setting, a bloom duration countdown, a bloom water volume setting, a bloom water volume, a bloom water temperature setting, a bloom water temperature, a brew duration setting, a brew duration countdown, a brew water volume setting, a brew water volume, a brew water temperature setting, a brew water temperature, or any combination thereof.

Example 9: The coffee brewer of example 5, further comprising:
a water pump disposed within the main body and configured to pump water from the water tank into the main body; and
a heating component disposed within the main body and configured to heat water pumped therethrough by the water pump, wherein the processing component is coupled to the water pump and the heating component and is further configured to control automatically operations of the water pump and the heating component such that all specific bloom phase settings input by the user and all specific brew phase settings input by the user are achieved.

Example 10: The coffee brewer of example 9, wherein the water pump is a diaphragm pump and the processing component is configured to control operations of the water pump dynamically using pulse width modulation, and wherein the heating component is a thick film flash heater having an integrated negative temperature coefficient component and the processing component is configured to control operations of the heating component dynamically using a proportional-integral-derivative loop.

Example 11: The coffee brewer of example 9, further comprising:
a first temperature sensor coupled to the processing component and configured to detect the temperature of cold water entering the water pump; and
a second temperature sensor coupled to the processing component and configured to detect the temperature of hot water exiting the heating component, wherein the processing component is further configured to adjust automatically and dynamically the power output of the water pump, the power output of the heating component, or both, in response to the water temperatures detected by the first temperature sensor and the second temperature sensor.

Example 12: The coffee brewer of example 11, wherein the adjusting dynamically is configured to result in the temperature of hot water exiting the heating component remaining substantially constant at a temperature selected by the user.

Example 13: The coffee brewer of example 12, the substantially constant hot water exit temperature is achieved regardless of any fluctuating voltage in outside power supplied to the coffee brewer.

Example 14: The coffee brewer of example 1, wherein the processing component is configured to control automatically operations of the water pump such that the volume of water pumped by the water pump while processing a user selected bloom phase or brew phase matches a coffee preparation setting input by the user for water volume for the user selected bloom phase or brew phase.

Example 15: The coffee brewer of example 1, further comprising:
a filter box located at the main body and configured for the bloom phase processing and the brew phase processing to be conducted therein; and
a multimode showerhead located at the filter box and configured to operate in multiple different brew modes, the multiple different brew modes including a first brew mode for brewing a single serving of coffee and a second brew mode for brewing a multiple serving batch of coffee, the multimode showerhead including a plurality of nozzles configured to dispense the water onto coffee brewing materials within the filter box.

Example 16: A method of brewing coffee with variable bloom and brew phases, the method comprising:
accepting automatically at a user input component of a coffee brewer user inputs regarding coffee preparation settings, wherein the coffee preparation settings include variable bloom phase settings, variable brew phase settings, or both;
processing automatically by a processing component of the coffee brewer a bloom phase within the coffee brewer according to any specific bloom phase settings input by the user; and
processing automatically by the processing component a brew phase within the coffee brewer according to any specific brew phase settings input by the user.

Example 17: The method of example 16, wherein the variable bloom phase settings include variable settings for bloom duration, bloom water volume, and bloom water temperature, and wherein the variable brew phase settings include variable settings for brew duration, brew water volume, and brew water temperature.

Example 18: The method of example 16, further comprising the steps of:
initiating automatically by the processing component a water pump and heating component within the coffee brewer after all user inputs are accepted and coffee production is set to begin; and
varying automatically by the processing component functions of the water pump and heating component to control the flow and temperature of water within the coffee brewer during the bloom phase processing, the brew phase processing, or both.

Example 19: The method of example 18, wherein the varying water pump and heating component functions results in the temperature of hot water exiting the heating component remaining substantially constant at a temperature selected by the user.

Example 20: The method of example 16, further comprising the steps of:
detecting automatically by a water level sensing component of the coffee brewer the exact volume of water in a water tank of the coffee brewer;
communicating automatically by the water level sensing component the detected volume of water to the processing component; and
controlling automatically by the processing component one or more additional functions of the coffee brewer based on the detected volume of water.

## Claims

1. A multimode showerhead configured for use with a beverage brewing system, the multimode showerhead comprising:
a first set of nozzles configured to dispense hot water onto beverage brewing materials within a filter box of the beverage brewing system when the multimode showerhead is configured to operate in a first brew mode for brewing a single beverage serving; and
a second set of nozzles configured to dispense hot water onto the beverage brewing materials when the multimode showerhead is configured to operate in a second brew mode for brewing a multiple serving beverage batch, wherein the second set of nozzles are closed when the multimode showerhead is configured to operate in the first brew mode.

2. The multimode showerhead of claim 1, further comprising a brew mode selection knob located proximate the center of the multimode showerhead, the brew mode selection knob being configured to rotate to allow a user to switch between the first brew mode and the second brew mode.

3. The multimode showerhead of claim 1 or claim 2 , wherein the first set of nozzles remain open when the multimode showerhead is configured to operate in the second brew mode.

4. The multimode showerhead of any preceding claim, further comprising:
a water inlet adapter configured to receive the hot water from a heating element of the beverage brewing system;
an internal water passage configured to facilitate flow of the hot water from the water inlet adapter to the first set of nozzles and the second set of nozzles; and
a face seal formed at an inner surface of the brew mode selection knob and an inner surface of the water inlet adapter, wherein rotation of the brew mode selection knob from the second brew mode to the first brew mode results in the face seal forming to restrict the flow of hot water to portions of the internal water passage where the second set of nozzles are located.

5. A coffee brewer, comprising:
a main body having an outer housing containing a plurality of internal components;
a water tank coupled to the main body and configured to hold water therein, wherein the water tank is further configured to provide the water into the main body for brewing coffee;
a filter box located at the main body and configured to receive the water and coffee brewing materials therein, wherein the filter box is further configured to brew coffee therein using the water and coffee brewing materials and to dispense the brewed coffee from a filter box outlet; and
the multimode showerhead of claim 1;
wherein the multimode showerhead is located at the filter box, the first brew mode is for brewing a single serving of coffee and the second brew mode is for brewing a multiple serving batch of coffee, and the plurality of nozzles are configured to dispense the water onto the coffee brewing materials within the filter box.

6. The coffee brewer of claim 5, wherein both of the first and second portions of the plurality of nozzles are open and dispense water therefrom when the multimode showerhead operates in the second brew mode.

7. The coffee brewer of claim 5 or claim 6, wherein the multimode showerhead further includes a brew mode selection knob located proximate the center of the multimode showerhead, the brew mode selection knob being configured to rotate to allow a user to switch between the first brew mode and the second brew mode;
and optionally wherein rotating the brew mode selection knob from the second brew mode to the first brew mode results in closing off water flow within the showerhead to the second portion of the plurality of nozzles.

8. The coffee brewer of any of claims 5 to 7, wherein the filter box includes a lid configured to facilitate opening and closing of the filter box;
and optionally wherein the multimode showerhead is coupled to an inner surface of the lid.

9. The coffee brewer of any of claims 5 to 8, further comprising:
a first removable basket configured to be installed into and removed from the filter box, wherein the first removable basket defines a first internal volume, is configured to receive the water and coffee brewing materials therein, is configured to brew coffee therein using the water and coffee brewing materials, and is configured to dispense the brewed coffee therefrom.

10. The coffee brewer of claim 9, wherein the first removable basket is configured to be used for the first brew mode but not for the second brew mode;
and optionally wherein the filter box includes a first sensor configured to detect the presence of the first removable basket, and wherein the coffee brewer is configured to brew coffee in the first brew mode only when the first removable basket is detected as being installed.

11. The coffee brewer of claim 9, further comprising:
a second removable basket configured to be installed into and removed from the filter box, wherein the second removable basket defines a second internal volume that is different than the first internal volume, is configured to receive the water and coffee brewing materials therein, is configured to brew coffee therein using the water and coffee brewing materials, and is configured to dispense the brewed coffee therefrom.

12. The coffee brewer of claim 11, wherein the second removable basket is configured to be used for the second brew mode but not for the first brew mode;
and optionally, wherein the filter box includes a second sensor configured to detect the presence of the second removable basket, and wherein the coffee brewer is configured to brew coffee in the second brew mode only when the second removable basket is detected as being installed.

13. The coffee brewer of any of claims 5 to 12, wherein the main body and water tank combine to define an overall shape that is substantially cubic.

14. A system configured for the brewing of hot beverages, the system comprising:
a brewer having a main body, a water tank, a filter box configured to brew beverages therein, and the multimode showerhead of claim 1;
a first removable basket configured to be installed into and removed from the filter box, wherein the first removable basket defines a first internal volume that corresponds to the single beverage serving, is configured to receive hot water and brewing materials therein, is configured to brew the single beverage serving therein using hot water from the multimode showerhead when the multimode showerhead operates in the first brew mode, and is configured to dispense the single beverage serving therefrom; and
a second removable basket configured to be installed into and removed from the filter box when the first removable basket is removed therefrom, wherein the second removable basket defines a second internal volume that corresponds to the multiple beverage serving batch, is configured to receive hot water and brewing materials therein, is configured to brew the multiple beverage serving batch therein using hot water from the multimode showerhead when the multimode showerhead operates in the second brew mode, and is configured to dispense the multiple beverage serving batch therefrom.

15. The system of claim 14, wherein the brewer includes a base located beneath the filter box, the base including a base sensor, and further comprising:
a removable container configured to be placed atop the base and receive the multiple beverage serving batch dispensed therefrom, the removable container including a bottom, a magnetic component located at the bottom, at least one sidewall, an upper opening, and a container volume between the bottom, the at least one sidewall, and the upper opening, the container volume being larger than a volume of the multiple beverage serving batch, wherein the base sensor is configured to detect when the magnetic component is present and communicate this presence to a processing component of the system
optionally, wherein the removable container further includes a removable lid covering the upper opening, the removable lid including a hollow knob protruding from its top surface, and wherein the hollow knob is configured to actuate a plunger at the bottom of the second removable basket to facilitate flowing the multiple beverage serving batch from the second removable basket through the hollow knob and into the removable container
and further optionally wherein the second removable basket includes a drip stop arrangement that prevents the multiple beverage serving batch from being dispensed therefrom when the plunger is not actuated.
